(19) Europäisches Patentamt
European Patent Office
Office européen des brevets

(11) **EP 2 562 225 A1**

(12) **EUROPEAN PATENT APPLICATION**
published in accordance with Art. 153(4) EPC

(43) Date of publication:
**27.02.2013 Bulletin 2013/09**

(51) Int Cl.:
***C09J 7/02*** (2006.01)       ***C09J 183/02*** (2006.01)
***C09J 201/10*** (2006.01)

(21) Application number: **11772081.3**

(22) Date of filing: **21.04.2011**

(86) International application number:
**PCT/JP2011/059861**

(87) International publication number:
**WO 2011/132749 (27.10.2011 Gazette 2011/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2010   JP 2010100127**

(71) Applicant: **Asahi Glass Company, Limited Tokyo 100-8405 (JP)**

(72) Inventors:
• **YASUDA, Teruhiko**
  **Tokyo 100-8405 (JP)**
• **AOKI, Yasutomo**
  **Tokyo 100-8405 (JP)**
• **ENNA, Genichirou**
  **Tokyo 100-8405 (JP)**

(74) Representative: **Blodig, Wolfgang**
  **Wächtershäuser & Hartz**
  **Patentanwaltspartnerschaft**
  **Ottostrasse 4**
  **80333 München (DE)**

(54) **ADHESIVE LAMINATE AND SURFACE PROTECTIVE SHEET**

(57)     To provide an adhesive laminate of which the change with time of high speed peel property is small.

An adhesive laminate comprising a substrate layer and an adherence substance layer, wherein the adherence substance layer is a layer obtained by curing a curable composition containing the following silyl group-containing polymer (S) and an organosilicate compound:

Silyl group-containing polymer (S): a silyl group-containing polymer having a polyether chain, a polyester chain and/or a polycarbonate chain in its main chain and having a hydrolyzable silyl group at its molecular terminal. The adhesive laminate has appropriate properties as a surface protective sheet.

EP 2 562 225 A1

**Description**

TECHNICAL FIELD

The present invention relates to an adhesive laminate and a surface protective sheet.

BACKGROUND ART

A pressure-sensitive adhesive is a solid having tack at room temperature and is an adhesive which is made to be in contact with an adherend followed by applying pressure to adhere and which has removability such that it can be peeled from the adherend without leaving an adhesive deposit. On the other hand, adhesives other than the pressure-sensitive adhesive are required to have a property such that adhesives (in a case of curable adhesives, adhesives after curing) are hardly peeled from an adherend. Hereinafter, in the present specification, in order to distinguish pressure-sensitive adhesives from adhesives, "adhesive" means one other than pressure-sensitive adhesives. Further, "pressure-sensitive adhesive" may sometimes be referred to as PSA.

Pressure-sensitive adhesives include a kind of a pressure-sensitive adhesive which is a curable composition and becomes a pressure-sensitive adhesive when cured. For example, in a case where a pressure-sensitive tape is produced, a curable composition layer is formed on a surface of a substrate, and then a pressure-sensitive adhesive layer is formed on the surface of the substrate by curing the curable composition. The substrate is bonded to the pressure-sensitive adhesive layer by adhesive force when the curable composition is cured. When this adhesive force is stronger than cohesion of the pressure-sensitive adhesive layer to an adherend, the pressure-sensitive adhesive layer is hardly peeled from the substrate at a time of removing the pressure-sensitive adhesive layer from the adherend. As mentioned above, a pressure-sensitive adhesive formed from a curable composition is required to acquire adhesive property at a time of curing the curable composition and have removability of a pressure-sensitive adhesive to be formed after curing. Accordingly, the pressure-sensitive adhesive formed from a curable composition is required to have properties different from curable adhesives.

The present invention relates to a pressure-sensitive adhesive formed from a curable composition, hereinafter a curable composition which is cured to be a pressure-sensitive adhesive is referred to as "curable composition", and a cured product which is formed by curing such a curable composition and has tack is referred to as "adherence substance".

As conventional pressure sensitive adhesives, an acrylic pressure sensitive adhesive, a rubber pressure sensitive adhesive, a silicone pressure sensitive adhesive, an urethane pressure sensitive adhesive and an oxyalkylene pressure sensitive adhesive are known. Particularly, it has been a recent tendency that an acrylic pressure sensitive adhesive is used in a wide range of applications from a strongly adhesive pressure sensitive adhesive having a strong adhesive strength to a weakly adhesive pressure sensitive adhesive having a weak adhesive strength. However, an acrylic pressure sensitive adhesive has a problem of an odor or dermal irritation in a case where an acrylic monomer remains in the pressure sensitive adhesive. Further, an acrylic pressure sensitive adhesive is likely to undergo a change with time after being applied to an adherend, whereby the adhesive strength tends to increase, or migration tends to be high. Accordingly, there has been a problem such that an adhesive deposit is likely to remain on the adherend, and the removability tends to be inadequate.

In the case of a rubber pressure sensitive adhesive, it is necessary to add a low molecular weight plasticizer to adjust the adhesive performance or for handling efficiency. Therefore, there is a problem such that upon expiration of a long period of time, the low molecular weight plasticizer migrates to the surface, thus bringing about a remarkable deterioration of the performance.

A silicone pressure sensitive adhesive is excellent in heat resistance. However, it is expensive and is used only for special applications.

An urethane pressure sensitive adhesive has a characteristic such that it is excellent in stability with little change with time (Patent Document 1). However, its production process tends to be long, and as compared with an acrylic pressure sensitive adhesive, it tends to be expensive. Further, as the production process is long, there has been a problem that fluctuation in the quality is likely to result, or the process management tends to be cumbersome.

An oxyalkylene pressure sensitive adhesive has a characteristic such that it can be applied without using an organic solvent (Patent Documents 2 and 3). However, bleeding of a tackifier may sometimes occur, and there has been a problem from the viewpoint of the stability of the adhesive strength for a long period of time.

In recent years, a protective sheet or a protective tape has been frequently used during the production of electric components, electronic materials or optical materials. The purpose is to protect such components or materials from scratching or dusts in the process for transportation, storage, etc. Particularly, in the production of electronic components or optical materials, it is necessary to completely prevent fine dusts from attaching to a product during its production. Because, dusts will cause contamination and thus cause product failure. As such a protective sheet or a protective tape, a pressure sensitive adhesive sheet or a pressure sensitive adhesive tape provided with a pressure sensitive adhesive layer having a low adhesive strength, is employed. As such a pressure-sensitive adhesive sheet or pressure-sensitive adhesive tape, a separator for protecting a pressure-sensitive adhesive layer is employed. Stains due to such a separator also become problematic in recent years (Patent Document 4). That is, a silicone contained in such a separator causes stains on electric components. Thus, a pressure-sensitive adhesive sheet having a separator in which a silicone releasing agent is not used is desired.

PRIOR ART DOCUMENTS

PATENT DOCUMENTS

Patent Document 1:     JP-A-2003-12751
Patent Document 2:     WO2005/73333
Patent Document 3:     WO2005/73334
Patent Document 4:     JP-A-06-297645

DISCLOSURE OF INVENTION

TECHNICAL PROBLEM

A conventional pressure sensitive adhesive such as an acrylic pressure sensitive adhesive has had a problem such that the adhesive strength tends to increase as time passes. Particularly in a case where it is desired to produce a pressure sensitive adhesive having a weak adhesive strength, there has been a problem such that even if the composition of the pressure sensitive adhesive is adjusted so that the initial adhesive strength be low, the adhesive strength is likely to increase as the adhesion time becomes long. If the adhesive strength increases, the adherend is likely to be deformed and may possibly be broken. On the other hand, if the composition of the pressure sensitive adhesive is adjusted to make the adhesive strength to be low upon expiration of a certain time, there has been a problem that no adequate adhesive strength is obtainable even at the initial stage. If no adequate adhesive strength is obtainable, it is likely to be peeled from the adherend unintentionally, and it cannot perform a prescribed role as e.g. a protective sheet. Further, the thickness of the pressure sensitive adhesive layer may be made thin in order to control the increase of the adhesive strength. However, in such a case, the essential function of the pressure-sensitive adhesive, namely adhesion to an adherend by small pressure, is likely to be impaired.

In the Patent Document 1, at the time of producing a resin as a raw material for the disclosed urethane pressure sensitive adhesive, a slight difference in the reactivity of the raw material is utilized to obtain a polymer having a prescribed structure. However, in order to control the structure by the difference in the reactivity, it is necessary to control the reaction conditions precisely. Consequently, in the production of this resin, control of the molecular weight is difficult, and it is difficult to obtain a pressure sensitive adhesive having a desired performance. Particularly, it was difficult to control the formation of a high molecular weight product and the progress in gelation along with the formation. The molecular weight relates to molecular cohesion and influential over the adhesion and removability. Further, if the gelation proceeds too much, the obtainable composition tends to have a high viscosity. If the composition has a high viscosity, at the time of mold processing of the pressure sensitive adhesive, it tends to be difficult to obtain an adherence substance layer having a prescribed uniform thickness, or the surface of the obtained adherence substance is likely to be not smooth, and thus there has been a problem from the viewpoint of the production. Even if the apparent viscosity is lowered by means of a solvent, there will be a problem such that a thick adherence substance is hardly obtainable, bubbling is likely to result, or a long time is required for drying.

Further, after the role of temporary fixing or protecting a member finishes, a protective sheet or a protective tape is peeled and removed. In general, tensile strength (peel strength) required to peel a pressure-sensitive adhesive sheet tends to increase as the tensile rate (peel rate) becomes high. For example, a surface protective sheet for an optical member such as a display or a polarizing plate, or an electronic member such as an electronic substrate or an IC chip is preferably peeled at a high speed smoothly. Relative to peel strength in a case of peeling at a low speed, peel strength in a case of peeling at a high speed is required not to be high. That is, a protective sheet is required to have an excellent high rate peeling property such that peel strength has small speed dependency.

Further, a surface protective sheet is required to have not only a property such that peel strength is free from change with time but also a property such that peel strength at a high speed peeling is free from change with time (will not substantially increase).

That is, a surface protective sheet is required to have low adhesive strength, an excellent initial high speed peeling property and a property that the high speed peeling property as time passes is similar to the initial one.

The present invention has been made in view of the above object. That is, it is an object of the present invention to provide an adhesive laminate which is excellent in an initial high speed peeling property and of which high speed peeling property will not change with time, without impairing properties of conventional surface protective sheets such as wettability to an adherend and removability.

SOLUTION TO PROBLEM

The present invention provides the following.

[1] An adhesive laminate comprising a substrate layer and an adherence substance layer, wherein the adherence substance layer is a layer obtained by curing a curable composition containing the following silyl group-containing polymer (S) and an organosilicate compound:

Silyl group-containing polymer (S): a silyl group-containing polymer having a polyether chain, a polyester chain and/or a polycarbonate chain in its main chain and having a hydrolyzable silyl group at its molecular terminal.

[2] The adhesive laminate according to the above [1], wherein the adherence substance layer is a layer obtained by curing a curable composition containing from 0.1 to 50 parts by mass of the organosilicate compound per 100 parts by mass of the silyl group-containing polymer (S).

[3] The adhesive laminate according to the above [1] or [2], wherein the hydrolyzable silyl group in the silyl group-containing polymer (S) is a trialkoxysilyl group.

[4] The adhesive laminate according to any one of the above [1] to [3], wherein the organosilicate compound is an organoxysilane represented by the following formula, and/or an organoxysiloxane:

$$(R^1O)(R^2O)(R^3O)Si[OSi(OR^4)(OR^5)]_m\text{-}OR^6 \qquad (1)$$

wherein m is 0 to 29, each of $R^1$ to $R^6$ which are independent and may be the same or different from one another is a $C_{1-10}$ monovalent organic group.

[5] The adhesive laminate according to the above [4], wherein $R^1$ to $R^6$ are all methyl groups or all ethyl groups.

[6] The adhesive laminate according to the above [4] or [5], wherein the average of m is from 3 to 9.

[7] The adhesive laminate according to any one of the above [1] to [6], wherein the thickness of the adherence substance layer is from 3 to 100 $\mu$m.

[8] The adhesive laminate according to any one of the above [1] to [7], wherein the substrate layer is made of at least one material selected from the group consisting of a polyester material, a polyolefin material, a polyamide material and an polyimide material.

[9] The adhesive laminate according to any one of the above [1] to [8], which is obtained by curing the curable composition on a substrate surface.

[10] The adhesive laminate according to any one of the above [1] to [9], which has an initial peel adhesive strength of at most 8 N/25mm in accordance with the 180° peeling method as defined in JIS Z-0237(1999)-8.3.1.

[11] The adhesive laminate according to any one of the above [1] to [10], which is used as a surface protective sheet.

[12] A surface protective sheet which is made of the adhesive laminate as defined in any one of the above [1] to [10].

[13] The surface protective sheet according to the above [12], which is used as a surface protective sheet for an electronic member.

[14] The surface protective sheet according to the above [12], which is used as a surface protective sheet for an optical member.

ADVANTAGEOUS EFFECTS OF INVENTION

The curable composition in the present invention is one wherein a hydrolyzable silyl group is used in a chain elongation mechanism.

The adhesive laminate of the present invention is excellent in the initial high speed peel property and has a high speed peel property equivalent to the initial stage after time passes, without impairing wettability to an adherend and removability of conventional surface protective sheets.

DESCRIPTION OF EMBODIMENTS

In this specification, the number average molecular weight (Mn), the mass average molecular weight (Mw) and the molecular weight distribution (Mw/Mn) are the molecular weights as calculated as polystyrene obtained by measurement by gel permeation chromatography employing a calibration curve prepared by using a standard polystyrene test sample having a known molecular weight.

In this specification, the average hydroxy value (OHV) is a value measured in accordance with JIS K-1557-6.4.

Further, in this specification, a polyether polyester polyol is a polyol having an ether bond and an ester bond.

In this specification, pressure sensitive adhesives may sometimes be classified by the peel adhesive strength (peel strength from the adherend). A case where the peel adhesive strength exceeds 0 N/25 mm and is at most 1 N/25 mm may be referred to as "weakly adhesive"; a case where the peel adhesive strength exceeds 1 N/25 mm and is at most 8 N/25 mm as "low adhesive"; a case where the peel adhesive strength exceeds 8 N/25 mm and is at most 15 N/25 mm as "moderately adhesive"; and a case where the peel adhesive strength exceeds 15 N/25 mm and is at most 50 N/25 mm as "strongly adhesive". Unless otherwise specified, the peel adhesive strength is in accordance with the following test method in accordance with the 180° peeling method as defined in JIS Z-0237(1999)-8.3.1.

That is, in an environment of 23°C, a pressure sensitive adhesive sheet test piece to be measured (width: 25 mm) is adhered to a stainless steel plate (SUS 304(JIS)) having a thickness of 1.5 mm and treated by bright annealing, and press-bonded by a rubber roll having a weight of 2 kg. 30 Minutes later, the peel strength (180° peeling, pulling speed: 0.3 m/min) is measured by means of a tensile tester as defined in JIS B-7721. The value, thus obtained, of the peel strength after 30 minutes from adhesion is taken as the "initial peel adhesive strength" in the present invention. Peel adhesive strength measured at a pulling speed of 30 m/min after 30 minutes from adhesion is taken as the "initial high speed peel adhesive strength" in the present invention.

It is considered that after an adherence substance is adhered to an adherend, the adherence substance in liquid state spreads on a surface of the adherend, whereby the peel adhesive strength increase with time and reaches a certain degree of peel adhesive strength. In the present specification, "peel adhesive strength after time passes" is peel strength (180° peeling, pulling speed: 0.3 m/min) which is considered to reach a certain degree of peel adhesive strength after a pressure-sensitive adhesive sheet is bonded to an adherend, and a certain time passes. After a certain time passes, peel strength considered to reach the certain degree of peel adhesive strength (180° peeling, pulling speed: 30 m/min) is taken as "high speed peel adhesive strength after time passes".

Here, it is considered that when an adhesive laminate is usually used, the adhesive laminate may be peeled at high speed between after a pressure-sensitive adhesive sheet is bonded and before the peel adhesive strength reaches a certain degree. Under such a situation that the peel adhesive strength is changing, the high speed peeling property after time passes is required to be the same level as the initial strength. Further, the mode for carrying out the present invention is not restricted to only when peel adhesive strength after time passes and high speed peel adhesive strength after time passes reach a certain degree.

In the present specification, when the change ratio (increasing ratio) of the high speed peel adhesive strength after time passes to the initial high speed peel adhesive strength is within 100%, the change with time of the high speed peel property is small (excellent). Here, the change ratio is a value obtained by dividing the difference between a value after time passes and an initial value by the initial value. What the change ratio of the high speed peel property is small (excellent) means that the stability of the high speed peel property is excellent.

In the present invention, an organosilicate compound is added to a silyl group-containing polymer (S) and cured, whereby the crosslinking density in an adherence substance increases, and without impairing wettability, the spread of the adherence substance in liquid state can be controlled. In order to obtain the effect of the present invention, the number of crosslinking points contained in one molecule of the organosilicate compound is preferably large. As such an organosilicate compound, a multimer having many reactive groups is preferred.

<Adhesive laminate>

The adhesive laminate of the present invention comprises a substrate layer (which may be simply referred to as a substrate) and an adherence substance layer (which may be simply referred to as an adherence substance) provided on the substrate layer.

The surface of the substrate layer at the adherence substance layer side may be subjected to adhesion-facilitating treatment. The adhesion-facilitating treatment is explained later.

The adherence substance layer is preferably in contact with the substrate layer, however, the adhesive laminate may have one or more intermediate layers between the adherence substance layer and the substrate layer. The intermediate layer is preferably one having high adhesive strength to layers (a substrate layer, an adherence substance layer and another intermediate layer) which are in contact with the intermediate layer. The intermediate layer is preferably a layer (for example, primer layer) formed by adhesion-facilitating treatment of the substrate layer.

The adhesive laminate may be any shape, however, the adhesive laminate is preferably a pressure-sensitive adhesive sheet or a pressure-sensitive adhesive tape. The pressure-sensitive adhesive sheet is a sheet having an adherence property. The pressure-sensitive adhesive sheet comprises a substrate sheet (substrate layer) and an adherence substance layer as constituting elements. Here, the thickness of the substrate sheet in the pressure-sensitive adhesive sheet is not particularly restricted, and the pressure-sensitive adhesive sheet may be in a film or plate form. Further, the pressure-sensitive adhesive tape is an adhesive laminate in a tape form and comprises a substrate film (substrate layer) having a sufficient length to its width and an adherence substance layer as constituting elements.

<Substrate layer>

The substrate layer has a function to support the adherence substance layer mechanically. The form of the substrate layer is not particularly limited. For example, the form may be a film, woven fabric, nonwoven fabric or paper. Among them, the form of a film is preferred because it is excellent in processability of the adhesive laminate. In the case of woven fabric or nonwoven fabric, it may be composed solely of a single material, or it may be a complex with other materials. Further, the substrate layer may be a single layer or a multilayer. In the case of a multilayer, various functional layers may be provided. The functional layer may, for example, be a conductive layer or an antireflection layer.

The material for the substrate layer may, for example, be a metal or a resin. The metal may, for example, be aluminum. The resin may, for example, be a polyolefin material, a polyester material, a polyamide material, a polyimide material or an acryl material. In a case where an adherend is an electronic member or an optical member, the resin material is preferred since the adherend is less likely to be influenced. Such a material may contain various additives.

Such an additive may, for example, be an antistatic agent, an ultraviolet absorbing agent or a stabilizer.

As the substrate made of the polyolefin material, since it is excellent in the mechanical property, the substrate made of a polypropylene material is preferred, and a biaxially oriented polypropylene (OPP) film may be particularly preferably mentioned. As a commercially available product, TORAYFAN, manufactured by Toray Industries, Inc. may be preferably exemplified.

Further, as the substrate made of the polyamide material, a substrate made of an aramid (aromatic polyamide) material may be particularly preferably exemplified. As a commercially available product, MICTRON, manufactured by Toray Industries, Inc. or ARAMICA, manufactured by Teijin Limited may, for example, be mentioned.

Further, as the substrate made of the polyimide material, a substrate made of an aromatic polyimide in which an aromatic compound is directly connected by imide bonds may, for example, preferably be mentioned. As a commercially available product, Kapton, manufactured by DuPONT-TORAY Co., Ltd. may, for example, be mentioned.

The polyester material may, for example, be a polyethylene terephthalate (PET), a polybutylene terephthalate (PBT) or a polyethylene naphthalate (PEN). Such a resin may contain other copolymerizable components or may be a mixture with other resins. As a commercially available product of a substrate made of a polyester material, Lumirror, manufactured by Toray Industries, Inc., Tetoron Film, Melinex, Mylar, Teflex or Teonex, manufactured by Teijin DuPont Films, DIAFOIL or HOSTAPHAN, manufactured by Mitsubishi Plastics, Inc. or TOYOBO ESTER FILM, manufactured by TOYOBO CO., LTD, may, for example, be mentioned.

The thickness of the substrate layer is not particularly restricted and may appropriately be adjusted depending on applications. As the supporting substrate for the adherence substance layer, the thickness is preferably from 5 to 300 μm, more preferably from 10 to 150 μm. Now, the present invention will be described with an example of the film form substrate as the substrate.

<Silyl group-containing polymer (S)>

The adherence substance of the present invention is obtained by curing a curable composition containing a silyl group-containing polymer (S). The silyl group-containing polymer (S) has a polyether chain, a polyester chain and/or a polycarbonate chain in its main chain and has a hydrolyzable silyl group at its molecular terminal.

It is preferred that as the silyl group-containing polymer (S), only one member of the following (S1) to (S3) or two or more of them in combination are used. Among them, (S1) is particularly preferred because the cured product to be obtained is excellent in flexibility and wettability.

<Silyl group-containing polymer (S1)>

The silyl group-containing polymer (S1) is obtained by introducing a hydrolyzable silyl group to a terminal of at least one polyol compound selected from the group consisting of a polyether polyol, a polyester polyol, a polycarbonate polyol and a polyether polyester polyol.

The polyether polyol in the present invention is a polyol having a polyether chain $(-OR^7-)_{n1}$ [wherein $R^7$ is a $C_{2-4}$ alkylene group, and n1 is an integer of from 1 to 1,000] and having no polyester chain.

The polyester polyol is a polyol having a polyester chain $(-OC(O)-R^8-)_{n2}$ [wherein $R^8$ is a $C_{2-8}$ alkylene group, and n2 is an integer of from 1 to 1,000] and having no polyether chain.

The polycarbonate polyol is a polyol having a polycarbonate chain $(-OC(O)-OR^9-)_{n3}$ [wherein $R^9$ is a $C_{2-20}$

alkylene group, and n3 is an integer of from 1 to 1,000] and having no polyether chain and no polyester chain.

The polyether polyester polyol is a polyol having both a polyether chain and a polyester chain.

The silyl group-containing polymer (S1) is particularly preferably one obtained by introducing a hydrolyzable silyl group to the above polyol compound by the method described in any one of hereinafter-described (PQ1) to (PQ5).

<Silyl group-containing polymer (S2)>

The silyl group-containing polymer (S2) is obtained by introducing a hydrolyzable silyl group to a terminal of a polyurethane prepolymer obtained by reacting at least one polyol compound selected from the group consisting of a polyether polyol, a polyester polyol, a polycarbonate polyol and a polyether polyester polyol with a polyisocyanate compound.

The silyl group-containing polymer (S2) is particularly preferably one obtained by introducing a hydrolyzable silyl group to a polyurethane prepolymer by the method described in any one of hereinafter-described (PQ1) to (PQ5).

<Silyl group-containing polymer (S3)>

The silyl group-containing polymer (S3) is obtained by introducing a hydrolyzable silyl group to a molecular terminal of a polyurethane polymer obtained by reacting at least one polyol compound selected from the group consisting of a polyether polyol, a polyester polyol, a polycarbonate polyol and a polyether polyester polyol with a polyisocyanate compound to obtain a polyurethane prepolymer, and further subjecting the polyurethane prepolymer to a chain-extending reaction by using a chain extending agent.

The silyl group-containing polymer (S3) is particularly preferably one obtained by introducing a hydrolyzable silyl group to a polyurethane polymer by the method described in any one of hereinafter-described (PQ1) to (PQ5).

<Polyol compound>

As the polyol compound in the present invention, a polyether polyol, a polyester polyol, a polycarbonate polyol or a polyether polyester polyol may be used. As the polyol compound, one type of these polyols may be used singly, or two or more types of them may be used in combination. It is particularly preferred to use at least one polyol having a polyether structure (polyether chain) from the viewpoint of ensuring flexibility of the adherence substance. It is considered that the flexibility of an adherence substance has an effect to suppress so-called zipping, which is a phenomenon such that when an adherence substance is peeled from an adherend, it is not smoothly peeled and peeling sound is emitted. Further, by the polyol having a polyether structure, it is possible to lower the viscosity of the curable composition.

When the silyl group-containing polymer (S) has a polyether chain, an oxyethylene group may be contained as its part. When an oxyethylene group is contained, it is possible to reduce the surface resistance particularly. In a case where an oxyethylene group is contained, the proportion of the oxyethylene group is preferably from 5 to 70 mass%, more preferably from 10 to 50 mass%, in the entire polyether chain. The oxyethylene groups may present in a polyether chain as a block or in a random manner.

The proportion of ether bonds ($-OR^7-$) in the silyl group-containing polymer (S) is preferably from 40 to 100 mol%, more preferably from 50 to 100 mol%, further preferably from 60 to 100 mol%, in the total (100 mol%) of ether bonds and ester bonds ($-OC(O)-R^8-$).

The polyol having a polyether structure means a polyol having a polyether chain such as a polyether polyol or a polyether polyester polyol.

In the present invention, as a polyol compound to obtain the silyl group-containing polymer (S), it is particularly preferred to use one or more types of polyols selected from a polyether polyol and a polyether polyester polyol, or to use one or more types of polyols selected from a polyether polyol and a polyether polyester polyol in combination with one or more types of polyols selected from a polyester polyol and a polycarbonate polyol. It is further preferred to use a polyether polyol or a polyether polyester polyol.

The polyether polyol is preferably a polyoxyalkylene polyol. The alkylene group constituting the polyoxyalkylene polyol may, for example, be an ethylene group, a trimethylene group, a tetramethylene group, a pentamethylene group, a hexamethylene group, a propylene group, a butylene group or a methyltrimethylene group. Such a polyether polyol may be obtained by subjecting a corresponding cyclic ether compound or epoxide compound to ring-opening polymerization. The cyclic ether compound may, for example, be tetrahydrofuran or oxetane. The epoxide compound may, for example, be ethylene oxide, propylene oxide or butylene oxide. The polyether polyol may preferably be, for example, polyoxytetramethylene polyol, polyoxyethylene polyol, polyoxypropylene polyol or polyoxyethylene polyoxypropylene polyol.

The polyether polyester polyol may, for example, be a polyol obtained by condensation polymerization of an ether diol with a dibasic acid compound or a polyol obtained by ring-opening copolymerization (particularly preferably random copolymerization) of an epoxide compound with a cyclic ester. The ether diol may, for example, be diethylene glycol, dipropylene glycol, polyoxyethylene glycol, polyoxypropylene glycol or polyoxyethylene polyoxypropylene glycol. The dibasic acid compound may, for example, be phthalic acid, maleic acid, adipic acid or fumaric acid. The cyclic ester (lactone) may, for example, be β-propiolactone (number of carbon atoms: 3), δ-valerolactone (number of carbon atoms: 5) or ε-caprolactone (number of carbon atoms: 6). Among them, ε-caprolactone is more preferred. The epoxide compound is as previously described.

The polyester polyol may, for example, be a polyol obtained by condensation polymerization of a low molecular diol such as ethylene glycol, propylene glycol, 1,4-butanediol or 1,6-hexanediol with the above dibasic acid compound.

The polycarbonate polyol is preferably one obtained by reacting a low molecular carbonate compound such as an alkylene carbonate, a dialkyl carbonate or a diaryl carbonate with a diol compound. Specific examples include polyhexamethylene carbonate diol, poly(3-methypentene carbonate) diol and polypropylene carbonate diol. Further, a mixture thereof or a copolymer thereof may also be mentioned.

The number of hydroxy groups in the polyol compound used to obtain the silyl group-containing polymer (S) in the present invention is preferably from 2 to 3, most preferably 2. That is, it is particularly preferred that a diol is used as the polyol compound. If the number of hydroxy groups is within this range, it is easy to suppress the viscosity of the polyurethane prepolymer to be obtained at a low level.

Further, the average hydroxy value of the polyol compound is preferably from 5 to 225 mgKOH/g, more preferably from 7 to 115 mgKOH/g, particularly preferably from 10 to 112 mgKOH/g. If the average hydroxy value is within this range, it is easy to suppress the viscosity of the polyurethane prepolymer to be obtained at a low level.

Particularly, in the case of obtaining the silyl group-containing polymer (S1), the average hydroxy value of the polyol compound is preferably from 5 to 112 mgKOH/g, more preferably from 7 to 56 mgKOH/g. Further, in the case of obtaining the silyl group-containing polymer (S2) or (S3), the average hydroxy value of the polyol compound is preferably from 25 to 225 mgKOH/g, more preferably from 30 to 115 mgKOH/g.

<Polyisocyanate compound>

In order to obtain the silyl group-containing polymer (S2) or (S3), a polyurethane prepolymer is used. As the polyisocyanate compound used for synthesis of this polyurethane prepolymer, a known one may be used. Specifically, it may, for example, be a diisocyanate compound such as diphenylmethane diisocyanate, tolylene diisocyanate, xylylene diisocyanate, methylene-bis(cyclohexyl isocyanate), isophorone diisocyanate or hexamethylene diisocyanate. One type of such a diisocyanate compound may be used alone, or two or more types may be used in combination. It is preferred that the polyisocyanate compound has a flexible chain with a view to improving the flexibility of the adherence substance to be obtained. Specifically, it may, for example, be tolylene diisocyanate, m-xylylene diisocyanate or isophorone diisocyanate. Among them, tolylene diisocyanate or isophorone diisocyanate is particularly preferred.

<Polyurethane prepolymer>

The polyurethane prepolymer used to obtain the silyl group-containing polymer (S2) or (S3) is obtained by reacting the polyol compound with a polyisocyanate compound. The terminal of the polyurethane prepolymer is an isocyanate group or a hydroxy group, and it is suitably selected according to the method of introducing a hydrolyzable silyl group. That is, it may be an isocyanate group-terminated polyurethane prepolymer or a hydroxy group-terminated polyurethane prepolymer.

At the time of synthesizing the polyurethane prepolymer, the ratio of the polyol compound and the polyisocyanate compound to be reacted is suitably selected depending upon the molecular weight (average hydroxy value) of the polyol compound and the target molecular weight of the polyurethane prepolymer. In the case of obtaining an isocyanate group-terminated polyurethane prepolymer, the ratio of the polyol compound and the polyisocyanate compound to be reacted is preferably such that the isocyanate index is more than 100 and at most 200, more preferably from 105 to 170, when the isocyanate index is defined as 100 times the value of the molar ratio of "NCO groups of the polyisocyanate compound/OH groups of the polyol compound". In the case of obtaining a hydroxy group-terminated polyurethane prepolymer, the ratio of the polyol compound and the polyisocyanate compound is preferably at least 50 and less than 100, more preferably from 50 to 98, by the isocyanate index.

The molecular weight of the polyurethane prepolymer is preferably from 2,000 to 100,000, more preferably from 3,000 to 80,000, by the number average molecular weight.

The polyurethane polymer used to obtain the silyl group-containing polymer (S3) is obtained by further subjecting the polyurethane prepolymer to a chain extending reaction by using a chain extending agent. The polyurethane prepolymer is the same as in the case of the silyl group-containing polymer (S2).

<Chain extending agent>

As the chain extending agent, in the case where an isocyanate group terminated polyurethane prepolymer is used as the polyurethane prepolymer, a low molecular diol or a low molecular diamine is preferred. The low molecular diol is preferably, for example, ethylene glycol, propylene glycol, 1,4-butanediol or 1,6-hexanediol. The low molecular diamine may, for example, be an aliphatic diamine such as ethylenediamine, propylenediamine, trimethylenediamine, tetramethylenediamine, pentamethylenediamine, hexamethylenediamine or 2,2,4-trimethylhexamethylenediamine; an alicyclic diamine such as piperazine, isophoronediamine or dicyclohexylmethane-4,4'-diamine; or an aromatic diamine such as tolylenediamine, phenylenediamine or xylylenediamine.

In the case where a hydroxy group-terminated polyurethane prepolymer is used as the polyurethane prepolymer, a diisocyanate compound is preferred as the chain extending agent. The diisocyanate compound is the same as the above one used for the polyurethane prepolymer.

<Polyurethane polymer>

The polyurethane polymer is obtained by subjecting the polyurethane prepolymer to a chain extending reaction. The terminal of the polyurethane polymer is an isocyanate group, a hydroxy group or an amino group, and it is suitably selected according to the method to introduce a hydrolyzable silyl group. That is, the polyurethane polymer may be an isocyanate group-terminated polyurethane polymer, a hydroxy group-terminated polyurethane polymer or an amino group-terminated polyurethane polymer.

At the time of synthesizing the polyurethane polymer, the ratio of the polyurethane prepolymer and the chain extending agent to be reacted is suitably selected depending upon the molecular weight of the polyurethane prepolymer and the target molecular weight of the polyurethane polymer.

In the case of subjecting an isocyanate group-terminated polyurethane prepolymer to chain extension by using a low molecular diol as the chain extending agent, the ratio of the polyurethane prepolymer and the low molecular diol is preferably such that the isocyanate index is more than 100 and at most 200, more preferably more than 100 and at most 150, when the isocyanate index is defined as 100 times the value of the molar ratio of "NCO groups of the polyurethane prepolymer/OH groups of the low molecular diol". If the ratio is within this range, it is possible to obtain the isocyanate group-terminated polyurethane resin. Further, in the case of obtaining a hydroxy group-terminated polyurethane resin, the isocyanate index is preferably at least 50 and less than 100, more preferably from 50 to 98.

In the case of subjecting the isocyanate group-terminated polyurethane prepolymer to chain extension by using a low molecular diamine as the chain extending agent, the ratio of the polyurethane prepolymer and the low molecular diamine is preferably such that the isocyanate index is more than 100 to 200, and more preferably more than 100 to 150, when the isocyanate index is defined as 100 times the value of the molar ratio of "NCO groups of the polyurethane prepolymer/NH$_2$ groups of the low molecular diamine". If the ratio is within this range, it is possible to obtain the amino group-terminated polyurethane polymer. Further, in the case of obtaining an isocyanate group-terminated polyurethane polymer, the isocyanate index is preferably from 50 to less than 100, more preferably from 50 to 98.

In the case of subjecting a hydroxy group-terminated polyurethane prepolymer to chain extension by using a diisocyanate compound as the chain extending agent to obtain the isocyanate group-terminated polyurethane polymer, the ratio of the polyurethane prepolymer and the diisocyanate compound is preferably such that the isocyanate index is more than 100 and at most 200, more preferably from 101 to 150, when the isocyanate index is defined as 100 times the value of the molar ratio of "NCO groups of the chain extending agent/OH groups of the polyurethane prepolymer".

Further, in the case of obtaining the hydroxy group-terminated polyurethane polymer, the isocyanate index is preferably at least 50 and less than 100, more preferably from 50 to 98.

The molecular weight of the polyurethane polymer is preferably from 4,000 to 500,000, more preferably from 8,000 to 250,000, by the number average molecular weight.

<Hydrolyzable silyl group>

The hydrolyzable silyl group in the present invention is a silyl group having a hydrolyzable group. Specifically, it is preferably a silyl group represented by -SiX$_a$R$^{10}$$_{(3-a)}$, wherein a is an integer of from 1 to 3. a is preferably from 2 to 3, most preferably 3.

Further, R$^{10}$ is a C$_{1-20}$ monovalent organic group and is preferably a C$_{1-6}$ monovalent organic group. Specifically, it may, for example, be a methyl group, an ethyl group, a propyl group, a butyl group or a pentyl group. R$^{10}$ may have a substituent. The substituent may, for example, be a methyl group or a phenyl group.

In the case where the hydrolyzable silyl group has a plurality of R$^{10}$, R$^{10}$'s may be the same or different from one another. That is, in the case where a is 1, each of two R$^{10}$'s bonded to one silicon atom (Si), which are independent of each other, represents a C$_{1-20}$ monovalent organic group which may have a substituent.

Further, the above X represents a hydroxy group (-OH) or a hydrolyzable group. The hydrolyzable group may, for example, be a -OR group (R is a hydrocarbon group having at most 4 carbon atoms). Such a -OR group is preferably an alkoxy group or an alkenyloxy group, particularly preferably an alkoxy group. The number of the carbon atoms in the alkoxy group or the alkenyloxy group is preferably at most 4. Specifically, it may, for example, be a methoxy group, an ethoxy group, a propoxy group or a propenyloxy group. Among them, a methoxy group or an ethoxy group is more preferred. In this case, it is possible to further improve the curing speed of the curable composition.

In the case where the hydrolyzable silyl group has a plurality of X, X's may be the same or different from one another. That is, when a is 2 or 3, each of X's which are independent of one another, represents a hydroxy group or a hydrolyzable group.

The hydrolyzable silyl group is preferably a trialkoxysilyl group, more preferably a trimethoxysilyl group or a triethoxysilyl group, particularly preferably a trimethoxysilyl group, it is because the storage stability of the silyl group-containing polymer (S) is good, and the curing speed of the curable composition is high, which is suitable for production of the adherence substance.

<Introduction of hydrolyzable silyl group>

In the present invention, a hydrolyzable silyl group is introduced to a molecular terminal of the polyol compound, the polyurethane prepolymer or the polyurethane polymer. The method of introducing a hydrolyzable silyl group may, for example, be a method (PQ1) using an isocyanate silane, a method (PQ2) using an aminosilane, a method (PQ3) using a mercaptosilane, a method (PQ4) using an epoxysilane or a method (PQ5) using a hydrosilane.

In the case where the silyl group-containing polymer (S) has a urethane bond or a urea bond, the ratio (molar ratio of MU/MS) of the total amount (MU) of urethane bonds and urea bonds to the amount (MS) of the hydrolyzable silyl group is not particularly limited, but MU/MS (molar ratio) is preferably from 1/1 to 100/1. If the ratio is within this range, adhesive strength and flexibility of the adherence substance can be controlled, and further, the stability of the adhesive strength is good. A urethane bond is formed by a reaction of an isocyanate group and a hydroxy group, and a urea bond is formed by a reaction of an isocyanate group and an amino group. In the case of the silyl group-containing polymer (S2) or (S3), the molar ratio MU/MS can be controlled by e.g. the molecular weight of the polyurethane prepolymer or the polyurethane polymer.

<Method (PQ1) using isocyanate silane>

In the method (PQ1), the functional group at the terminal of the polyol compound, the polyurethane prepolymer or the polyurethane polymer is a group reactive with an isocyanate group, and the functional group at the terminal is reacted with an isocyanate silane to introduce a hydrolyzable silyl group.

The isocyanate silane may, for example, be isocyanatomethyltrimethoxysilane, 2-isocyanatoethyltrimethoxysilane, 3-isocyanatopropyltrimethoxysilane, 4-isocyanatobutyltrimethoxysilane, 5-isocyanatopentyltrimethoxysilane, isocyanatomethyltriethoxysilane, 2-isocyanatoethyltriethoxysilane, 3-isocyanatopropyltriethoxysilane, 4-isocyanatobutyltriethoxysilane, 5-isocyanatopentyltriethoxysilane, isocyanatomethylmethyldimethoxysilane, 2-isocyanatoethylethyldimethoxysilane, 3-isocyanatopropyltrimethoxysilane or 3-isocyanatopropyltriethoxysilane.

Among them, 3-isocyanatopropyltrimethoxysilane or 3-isocyanatopropyltriethoxysilane is preferred.

The group reactive with an isocyanate group may, for example, be a hydroxy group or an amino group. In the case of using a hydroxy group, for example, a polyol compound, a hydroxy group-terminated polyurethane prepolymer, a hydroxy group-terminated polyurethane polymer obtained by subjecting a hydroxy group-terminated polyurethane prepolymer further to a chain extending reaction by using a diisocyanate compound, or a hydroxy group-terminated polyurethane prepolymer obtained by reacting an isocyanate group-terminated polyurethane prepolymer with a low molecular diol may be used.

In the case of using an amino group, for example, an amino group-terminated polyurethane polymer obtained by subjecting an isocyanate group-terminated polyurethane prepolymer to a chain extending reaction by using a low molecular diamine may be used.

A catalyst may be used in this reaction. As the catalyst, a known urethane-forming catalyst may be employed. It may, for example, be an organic acid salt or organic metal compound, or a tertiary amine. Specifically, the organic acid salt or organic metal compound may, for example, be a tin catalyst such as dibutyltin dilaurate (DBTDL), a bismuth catalyst such as bismuth (2-ethylhexanoate) [bismuth tris(2-ethylhexanoate)], a zinc catalyst such as zinc naphthenate, a cobalt catalyst such as cobalt naphthenate or a copper catalyst such as copper 2-ethylhexanoate. The tertiary amine may, for example, be triethylamine, triethylenediamine or N-methylmorpholine.

<Method (PQ2) using aminosilane>

In the method (PQ2), the functional group at the terminal of the polyol compound, the polyurethane prepolymer or the polyurethane polymer is a group reactive with an amino group, and the functional group at the terminal is reacted with an aminosilane to introduce a hydrolyzable silyl group. A group reactive with an amino group may be introduced at the terminal of the polyol compound, the polyurethane prepolymer or the polyurethane polymer, as the case requires.

The aminosilane may, for example, be 3-aminopropyltrimethoxysilane, 3-aminopropyltriethoxysilane, 3-aminopropyltriisopropoxysilane, 3-aminopropylmethyldimethoxysilane, 3-aminopropylmethyldiethoxysilane, 3-(2-aminoethyl)aminopropyltrimethoxysilane, 3-(2-aminoethyl)aminopropylmethyldimethoxysilane, 3-(2-aminoethyl)aminopropyltriethoxysilane, 3-(2-aminoethyl)aminopropylmethyldiethoxysilane, 3-(2-aminoethyl)aminopropyltriisopropoxysilane, 3-(2-(2-aminoethyl)aminoethyl)aminopropyltrimethoxysilane, 3-(6-aminohexyl)aminopropyltrimethoxysilane, 3-(N-ethylamino)-2-methylpropyltrimethoxysilane, N-(2-aminoethyl)aminomethyltrimethoxysilane, N-cyclohexylaminomethyltriethoxysilane, N-cyclohexylaminomethyldiethoxymethylsilane, ureidopropyltrimethoxysilane, ureidopropyltriethoxysilane, N-phenyl-3-aminopropyltrimethoxysilane, N-phenylaminomethyltrimethoxysilane, N-benzyl-3-aminopropyltrimethoxysilane, N-vinylbenzyl-3-aminopropyltriethoxysilane, N-(3-triethoxysilylpropyl)-4,5-dihydroimidazole, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane or N,N'-bis[3-(trimethoxysilyl)propyl]ethylenediamine.

Among them, 3-aminopropyltrimethoxysilane or 3-aminopropyltriethoxysilane is preferred.

The group reactive with an amino group may, for example, be an isocyanate group, an acryloyl group or a methacryloyl group. In the case of using an isocyanate group, for example, an isocyanate group-terminated polyurethane prepolymer, an isocyanate group-terminated polyurethane polymer obtained by subjecting a hydroxy group-terminated polyurethane prepolymer further to a chain extending reaction by using an isocyanate compound, or an isocyanate group-terminated polyurethane polymer obtained by subjecting an isocyanate group-terminated polyurethane prepolymer further to a chain extending reaction by using a low molecular diol compound may be used.

In the case of using an acryloyl group or a methacryloyl group, for example, an isocyanate group-terminated polyurethane prepolymer reacted with a hydroxyalkyl acrylate or a hydroxyalkyl methacrylate, a polyol compound, or a hydroxy group-terminated polyurethane prepolymer or a hydroxy group-terminated polyurethane polymer reacted with an acrylic acid or a methacrylic acid may be used. The hydroxyalkyl acrylate may, for example, be hydroxyethyl acrylate or hydroxybutyl acrylate. The hydroxyalkyl methacrylate may, for example, be hydroxyethyl methacrylate or hydroxybutyl methacrylate. The reaction of an amino group with an isocyanate group is a urea bond-forming reaction. In this reaction, the above urethane-forming catalyst may be employed. The reaction of an amino group with an acryloyl group is Michael addition reaction.

<Method (PQ3) using mercaptosilane>

In the method (PQ3), the functional group at the terminal of the polyol compound, the polyurethane prepolymer or the polyurethane polymer is a group reactive with a mercapto group, and the functional group at the terminal is reacted with a mercaptosilane to introduce a hydrolyzable silyl group. A group reactive with a mercapto group may be introduced at the terminal of the polyol compound, the polyurethane prepolymer or the polyurethane polymer, as the case requires.

The mercaptosilane may, for example, be 3-mercaptopropyltrimethoxysilane, 3-mercaptopropylmethyldimethoxysilane, 3-mercaptopropyltriethoxysilane, 3-mercaptopropylmethyldiethoxysilane, mercaptomethyltrimethoxysilane or mercaptomethyltriethoxysilane. Among them, 3-mercaptopropyltrimethoxysilane or 3-mercaptopropyltriethoxysilane is preferred.

The group reactive with a mercapto group may, for example, be an isocyanate group, an acryloyl group or an allyl group. In the case of using an isocyanate group or an acryloyl group, the same compound as in the method (PQ2) using an aminosilane may be used. In the case of using an allyl group, the terminal of the polyurethane prepolymer or the polyurethane polymer is made into an isocyanate group and then is reacted with an allyl alcohol to obtain an allyl group. Further, a hydroxyl group in the polyol compound etc. may be converted into an allyloxy group to form an allyl group at a terminal. For example, a hydroxyl group in a polyol compound etc. is converted into an alkali metal alkoxide, followed by reaction with an allyl chloride to convert the hydroxyl group into an allyloxide group.

In the reaction of a mercapto group and an isocyanate group, a catalyst may be employed, in the same manner as in a urethane-forming reaction. In the reaction of a mercapto group with an acryloyl group or an allyl group, a radical initiator is preferably used. The radical initiator may, for example, be azobisisobutyronitrile (AIBN).

<Method (PQ4) using epoxysilane>

In the method (PQ4), the functional group at the terminal of the polyol compound, the polyurethane prepolymer or the polyurethane polymer is a group reactive with an epoxy group, and the functional group at the terminal is reacted with an epoxysilane to introduce a hydrolyzable silyl group. A group reactive with an epoxy group may be introduced at the terminal of the polyol compound, the polyurethane prepolymer or the polyurethane polymer, as the case requires.

As the epoxy silane, for example, 3-glycidoxypropyltrimethoxysilane, 3-glycidoxypropyltriethoxysilane, 3-glycidoxypropylmethyldimethoxysilane, 2-(3,4-epoxycyclohexyl)ethyltrimethoxysilane or 2-(3,4-epoxycyclohexyl)ethyltriethoxysilane is preferred. Among them, 3-glycidoxypropyltrimethoxysilane or 3-glycidoxypropyltriethoxysilane is preferred.

The group reactive with an epoxy group may, for example, be a hydroxy group or an amino group. With respect to each of the hydroxy group and the amino group, the same compound as in the method (PQ1) using an isocyanate silane may be used. As a catalyst in the reaction with an epoxy group, a known catalyst such as an amine or an acid anhydride may be employed. It may, for example, be a chain aliphatic polyamine, an alicyclic polyamine, an aromatic polyamine, a modified aliphatic polyamine or an imidazole compound. Particularly, a tertiary amine such as N,N-dimethylpiperazine, triethylenediamine, 2,4,6-tris(dimethylaminomethyl)phenol (DMP-30) or benzyldimethylamine (BDMA) is preferred.

<Method (PQ5) using hydrosilane>

In the method (PQ5), the functional group at the terminal of the polyol compound, the polyurethane prepolymer or the polyurethane polymer is a group capable of being hydrosilylated, and the functional group at the terminal is reacted with a hydrosilane to introduce a hydrolyzable silyl group. A group capable of being hydrosilylated may be introduced at the terminal of the polyol compound, the polyurethane prepolymer or the polyurethane polymer, as the case requires.

The hydrosilane may, for example, be trimethoxysilane, triethoxysilane, methyldiethoxysilane, methyldimethoxysilane, phenyldimethoxysilane or 1-[2-(trimethoxysilyl)ethyl]-1,1,3,3-tetramethyldisiloxane.

The group capable of being hydrosilylated may, for example, be an acryloyl group or an allyl group. With regard to each of the acryloyl group and the allyl group, the same compound as in the method (PQ3) using a mercaptosilane may be used. In this reaction, it is preferred to use a hydrosilylation catalyst. The hydrosilylation catalyst may, for example, be chloroplatinic acid.

<Production process of adherence substance>

The process for producing an adherence substance in the present invention comprises, in the case of using a silyl group-containing polymer (S1), a step (PP1A) of introducing a hydrolyzable silyl group to a molecular terminal of the polyol compound to prepare a silyl group-containing polymer (S1); and a step (PP1B) of curing a curable composition containing the silyl group-containing polymer (S1) to obtain an adherence substance.

Further, the process for producing an adherence substance in the present invention comprises, in the case of using a silyl group-containing polymer (S2), a step (PP2A) of reacting a polyol compound with a polyisocyanate compound to prepare a polyurethane prepolymer; a step (PP2B) of introducing a hydrolyzable silyl group to a molecular terminal of the polyurethane prepolymer to prepare a silyl group-containing polymer (S2); and a step (PP2C) of curing a curable composition containing the silyl group-containing polymer (S2) to obtain an adherence substance.

In the case of using a silyl group-containing polymer (S3), the process comprises a step (PP3A) of reacting a polyol compound with a polyisocyanate compound to prepare a polyurethane prepolymer; a step (PP3B) of subjecting the polyurethane prepolymer to a chain extending reaction by using a chain extending agent to prepare a polyurethane polymer; a step (PP3C) of introducing a hydrolyzable silyl group to a molecular terminal of the polyurethane polymer to prepare a silyl group-containing polymer (S3); and a step (PP3D) of curing a curable composition containing the silyl group-containing polymer (S3) to obtain an adherence substance.

The steps (PP2A) and (PP3A) of preparing a polyurethane prepolymer are the same steps. Further, the steps (PP1A), (PP2B) and (PP3C) of introducing a hydrolyzable silyl group are the same steps. Further, the steps (PP1 B), (PP2C) and (PP3D) of curing a curable composition to obtain an adherence substance are the same steps.

<Steps ((PP2A) and (PP3A)) of preparing polyurethane prepolymer>

A polyurethane prepolymer is obtained by reacting a polyol compound with a polyisocyanate compound. The ratio in the reaction is as described above. Further, in this reaction, a catalyst may be employed. As the catalyst, the above urethane-forming catalyst may be employed. The reaction temperature is preferably from 40 to 160°C, more preferably from 80 to 120°C.

<Step (PP3B) of preparing polyurethane polymer>

A polyurethane polymer is obtained by subjecting the polyurethane prepolymer to a chain extending reaction by using a chain extending agent. The ratio in the reaction is as described above. Further, in this reaction, a catalyst may be employed. As the catalyst, the above urethane-forming catalyst may be employed. The reaction temperature is preferably from 40 to 160°C, more preferably from 80 to 120°C.

<Steps ((PP1A), (PP2B) and (PP3C)) of introducing hydrolyzable silyl group>

The step of introducing a hydrolyzable silyl group to the polyol compound, the polyurethane prepolymer or the polyurethane polymer is as described in the above sections of steps (PQ1) to (PQ5). The proportion of the hydrolyzable silyl group to be introduced (hereinafter also referred to as the hydrolyzable silyl group introducing proportion) is preferably from 50 to 100 mol%, more preferably from 80 to 100 mol%, provided that all terminals that are theoretically reactive is defined as 100 mol%.

<Steps ((PP1B), (PP2C) and (PP3D)) of curing curable composition to obtain adherence substance>

A curable composition containing the silyl group-containing polymer (S) is cured to obtain an adherence substance. The curable composition in the present invention may contain another polymer having a hydrolyzable silyl group. The proportion of such another polymer having a hydrolyzable silyl group is preferably at most 30 mass%, more preferably at most 10 mass%, in the entire curable composition.
The silyl group-containing polymer (S) and, as the case requires, the polymer having another hydrolyzable silyl group are preferably sufficiently mixed, incorporating hereinafter-described various types of additives, in the presence or absence of a solvent to be made into a curable composition. The curable composition preferably contains the silyl group-containing polymer (S1) from the viewpoint of excellent flexibility of the cured product.

<Organosilicate compound>

The organosilicate compound is a compound wherein an organic group bonds to a silicon atom via an oxygen atom. As the organosilicate, a monomeric compound (in the formula (1), m=0) having four organic groups each of which bonds to one silicon atom via an oxygen atom (in the present specification, referred to as organoxysilane) and a multimer compound (in the formula (1), m= at least 1) having silicon atoms which constitute a siloxane main chain ((Si-O)x) (in the present specification, referred to as organoxysiloxane) which is represented by the following formula (1) may be mentioned. The organoxysiloxane is particularly preferred, since the effect to higher the crosslinking density can be obtained. In addition, a compound having an organic group which bonds to a silicon atom via an oxygen atom and a compound having an organic group which directly bonds to a silicon atom may be mentioned.
The organoxysilane and the organoxysiloxane may be used in combination, and the ratio (organoxysilane:organoxysiloxane) is preferably from 0:100 to 30:70, more preferably from 0:100 to 10:90.

$$(R^1O)(R^2O)(R^3O)Si[OSi(OR^4)(OR^5)]_m\text{-}OR^6 \quad (1)$$

Each of organic groups $R^1$ to $R^6$ which bonds to a silicone atom via an oxygen atom is not particularly restricted and may be the same or different. The organic group may, for example, be a linear, branched or cyclic alkyl group. The organic group is preferably a $C_{1-10}$ linear or branched alkyl group. Specifically, a methyl group, an ethyl group, a n-propyl group, an iso-propyl group, a n-butyl group, an iso-butyl group, a tert-butyl group, a n-pentyl group, an iso-pentyl group, a neopentyl group, a hexyl group or an octyl group may be mentioned. Particularity, a $C_{1-4}$ alkyl group is preferred. As another organic group, an aryl group may be mentioned.
From the viewpoint of high reaction rate, each of $R^1$ to $R^6$ is preferably the same $C_{1-4}$ alkyl group. Further, it is particularly preferably a $C_{1-2}$ alkyl group (namely a methyl group or an ethyl group).
As specific examples of such an organoxysilane, tetramethoxysilane, tetraethoxysilane, tetrapropoxysilane, tetrabutoxysilane, tetraphenoxysilane and dimethoxydiethoxysilane may be mentioned. Particularly, tetramethoxysilane and tetraethoxysilane are preferred.
As the organoxysiloxane, a hydrolyte or a condensate of the above organoxysilane may be mentioned. A part of functional groups in such an organoxysiloxane is hydrolyzed and then condensation-reacted to form a crosslinked structure. Particularly, a condensate of tetramethoxysilane or a condensate of tetraethoxysilane is preferred.
Further, as the above condensate, in the above formula (1), a condensate of which m=1 to 29 and an average of multimer of 2 to 30 is preferably used. For example, methylsilicate 51 (average 4 multimer), methylsilicate 53A (average 7 multimer), ethylsilicate 40 (average 5 multimer) and ethylsilicate 48 (average 10 multimer) and EMS-485 (ethyl methyl silicate) manufactured by COLCOAT CO., LTD., silicate 40 (average 5 multimer), silicate 45 (average 7 multimer) and M silicate 51 (average 4 multimer) manufactured by TAMA CHEMICALS CO., LTD. or methylsilicate 51 (average 4 multimer) manufactured by Fuso Pharmaceutical Industries, Ltd. may be used as a commercially available product.

When the organoxysiloxane has an average of 30 multimer (m=29) or less, the crosslink density is appropriate, and the wettability is excellent. When the organoxysiloxane is at least 2 multimer, the high speed peel adhesive strength is not likely to be changed with the lapse of time, and the increase of the high speed peel adhesive strength with lapse of time can be suppressed. From the viewpoint of the relationship of the crosslink density of the adherence substance and the amount of the organoxysiloxane to be added, the average of the organoxysiloxane is preferably from 2 to 30 multimer (m=1 to 29), and from the viewpoint of suppressing the change rate (the increasing rate) of the high speed peel adhesive strength after time passes within 100%, the average is particularly preferably from 4 to 10 multimer (m=3 to 9).

With respect to the mixing ratio of the silyl group-containing polymer (S) and the organosilicate compound which constitute the curable composition, the amount of the organosilicate compound is preferably from 0.1 to 50 parts by mass, more preferably from 0.1 to 30 parts by mass, particularly preferably from 0.1 to 10 parts by mass, per 100 parts by mass of the silyl group-containing polymer (S).

When the amount of the organosilicate compound is from 0.1 to 30 parts by mass, without impairing the wettability, the initial high speed peel property is excellent, and the high speed peel property after time passes is excellent.

<Additives>

The curable composition in the present invention may contain additives. However, in the curable composition, it is preferred not to use a plasticizer. Particularly, it is preferred not to use an ester type plasticizer such as dioctyl phthalate. If an ester type plasticizer is used, the adhesive strength between the cured product (adherence substance) and the substrate may be decreased, and an adhesive deposit may result.

[Curing agent]

The curable composition in the present invention is cured by contact with water. Accordingly, it reacts with water in the atmosphere to undergo moisture curing. Otherwise, immediately before the curing, water ($H_2O$) may be added as a curing agent. In such a case, the amount of water is preferably from 0.01 to 5 parts by mass, more preferably from 0.01 to 1 part by mass, particularly preferably from 0.05 to 0.5 part by mass, per 100 parts by mass of the total amount of the silyl group-containing polymer (S) and the organosilicate compound. The amount of the curing agent is adjusted to be at least 0.01 part by mass, whereby the curing can effectively be promoted, and the amount of the curing agent is adjusted to be at most 5 parts by mass, whereby the working time in use can be secured.

Here, the total amount of the silyl group-containing polymer (S) and the organosilicate compound is the total amount of compounds having a hydrolyzable silyl group, and in a case where the curable composition contains another compound having a hydrolyzable silyl group, the total amount includes an amount of such another compound having a hydrolyzable silyl group. As a compound having a hydrolyzable silyl group other than the silyl group-containing polymer (S) and the organosilicate compound, an optional component such as a polymer having a hydrolyzable silyl group other than the silyl group-containing polymer (S) (other than the organosilicate compound) or the after-mentioned substrate anchor modifier (P) having a hydrolyzable silyl group may be mentioned. Further, with respect to the proportion of other components mentioned below, the total amount of the silyl group-containing polymer (S) and the organosilicate compound is a total amount of compounds having a hydrolyzable silyl group, as mentioned above.

[Curing catalyst]

It is preferred to incorporate a curing catalyst (a curing accelerator) to accelerate the hydrolysis and/or crosslinking reaction of the hydrolyzable silyl groups.

As such a curing catalyst, a known catalyst may suitably be used as a component to accelerate the reaction of the hydrolyzable silyl groups. Specifically, it may, for example, be an organic tin carboxylate such as dibutyltin diacetate, dibutyltin dilaurate, dioctyltin dilaurate, $(n-C_4H_9)_2Sn(OCOCH=CHCOOCH_3)_2$, $(n-C_4H_9)_2Sn(OCOCH=CHCOO(n-C_4H_9))_2$, $(n-C_8H_{17})_2Sn(OCOCH=CHCOOCH_3)_2$, $(n-C_8H_{17})_2Sn(OCOCH=CHCOO(n-C_4H_9))_2$ or $(n-C_8H_{17})_2Sn(OCOCH=CHCOO(iso-C_8H_{17}))_2$; a sulfur-containing organic tin compound such as $(n-C_4H_9)_2Sn(SCH_2COO)$, $(n-C_8H_{17})_2Sn(SCH_2COO)$, $(n-C_8H_{17})_2Sn(SCH_2CH_2COO)$, $(n-C_8H_{17})_2Sn(SCH_2COOCH_2CH_2OCOCH_2S)$, $(n-C_4H_9)_2Sn(SCH_2COO(iso-C_8H_{17}))_2$, $(n-C_8H_{17})_2Sn(SCH_2COO(iso-C_8H_{17}))_2$, $(n-C_8H_{17})_2Sn(SCH_2COO(n-C_8H_{17}))_2$ or $(n-C_4H_9)_2SnS$; an organic tin oxide such as $(n-C_4H_9)_2SnO$ or $(n-C_8H_{17})_2SnO$; a reaction product of an ester compound selected from the group consisting of ethyl silicate, dimethyl maleate, diethyl maleate, dioctyl maleate, dimethyl phthalate, diethyl phthalate and dioctyl phthalate, with the above-mentioned organic tin oxide; a chelate tin compound such as $(n-C_4H_9)_2Sn(acac)_2$, $(n-C_8H_{17})_2Sn(acac)_2$, $(n-C_4H_9)_2Sn(OC_8H_{17})(acac)$, $(n-C_4H_9)_2Sn(OC(CH_3)CHCO_2C_2H_5)_2$, $(n-C_8H_{17})_2Sn(OC(CH_3)CHCO_2C_2H_5)_2$, $(n-C_4H_9)_2Sn(OC_8H_{17})(OC(CH_3)CHCO_2C_2H_5)$ or bisacetyl acetonate tin (where the above acac means an acetylacetonate ligand, and $OC(CH_3)CHCO_2C_2H_5$ means an ethyl acetoacetate ligand); a reaction product of an alkoxysilane selected from the group consisting of tetramethoxysilane, tetraethoxysilane and tetrapropoxysilane, with the above chelate tin compound; or an organic tin compound containing a -SnOSn- bond, such as $(n-C_4H_9)_2$ $(CH_3COO)SnOSn(OCOCH_3)(n-C_4H_9)_2$ or $(n-C_4H_9)_2(CH_3O)SnOSn(OCH_3)(n-C_4H_9)_2$.

Further, specific examples of the curing catalyst include a bivalent tin carboxylate such as tin 2-ethylhexanoate, tin n-octylate, tin naphthenate or tin stearate; a metal salt other than a tin salt of an organic carboxylic acid such as octylic acid, oleic acid, naphthenic acid or stearic acid; a calcium carboxylate, a zirconium carboxylate, an iron carboxylate, a vanadium carboxylate, a bismuth carboxylate such as bismuthtris-2-ethyl hexanoate, a lead carboxylate, a titanium carboxylate, a nickel carboxylate or the like; a titanium alkoxide such as tetraisopropyl titanate, tetrabutyl titanate, tetramethyl titanate or tetra(2-ethylhexyl titanate); an aluminum alkoxide such as aluminum isopropylate or mono-sec-butoxyaluminum diisopropylate; a zirconium alkoxide such as zirconium n-propylate or zirconium n-butyrate; a titanium chelate such as titanium tetraacetylacetonate, dibutyloxytitanium diacetylacetonate, titanium ethylacetoacetate, titanium octylene glycolate or titanium lactate; an aluminum chelate such as aluminum trisacetylacetonate, aluminum trisethylacetoacetate, or diisopropoxy aluminum ethylacetoacetate; a zirconium compound such as zirconium tetraacetylacetonate, zirconium bisacetylacetonate, zirconium acetylacetonate bisethyl actoacetate or zirconium acetate; an acidic compound such as phosphoric acid, p-toluenesulfonic acid or phthalic acid; an aliphatic monoamine such as butylamine, hexylamine, octylamine, decylamine or laurylamine; an aliphatic diamine such as ethylenediamine or hexanediamine; an aliphatic polyamine such as diethylenetriamine, triethylenetetramine ortetraethylenepentamine; a heterocyclic amine such as piperidine, piperazine or 1,8-diazabicyclo(5.4.0)udecene-7; an aromatic amine such as metaphenylenediamine, an alkanolamine such as monoethanolamine, diethanolamine or triethanolamine; a trialkylamine such as triethylamine; a primary to tertiary ammonium acid salt made of the above amine and an organic acid such as an aliphatic monocarboxylic acid (such as formic acid, acetic acid, octylic acid or 2-ethylhexanoic acid), an aliphatic polycarboxylic acid (such as oxalic acid, malonic acid, succinic acid, glutaric acid or adipic acid), an aromatic monocarboxylic acid (such as benzoic acid, toluic acid or ethylbenzoic acid), an aromatic polycarboxylic acid (such as phthalic acid, isophthalic acid, terephthalic acid, nitrophthalic acid or trimellitic acid), a phenol compound (such as phenol or resorcinol), a sulfonic acid compound (such as an alkyl benzenesulfonic acid, toluenesulfonic acid or benzenesulfonic acid) or a phosphoric acid compound, or an inorganic acid such as hydrochloric acid, hydrobromic acid or sulfuric acid; an ammonium hydroxide such as triethylmethylammonium hydroxide, trimethylbenzylammonium hydroxide, hexyltrimethylammonium hydroxide, octyltrimethylammonium hydroxide, decyltrimethylammonium hydroxide, dodecyltrimethylammonium hydroxide, octyldimethylethylammonium hydroxide, decyldimethylethylammonium hydroxide, dodecyldimethylethylammonium hydroxide, dihexyldimethylammonium hydroxide, dioctyldimethylammonium hydroxide, didecyldimethylammonium hydroxide or didodecyldimethylammonium hydroxide; and an amine compound such as various modified amines to be used as a curing agent for an epoxy resin.

These curing catalysts may be used alone or in combination as a mixture of two or more of them. In a case where two or more of them are combined, it is preferred to combine, for example, an aliphatic monoamine or another above-mentioned amine compound to the above-mentioned metal-containing compound such as a reaction product of the above-mentioned bivalent tin carboxylate, organic tin carboxylate or organic tin oxide with an ester compound, since it is thereby possible to obtain an excellent curability.

In a case where a curing catalyst is to be added, its amount is preferably from 0.001 to 10 parts by mass, more preferably from 0.01 to 5 parts by mass, per 100 parts by mass of the total amount of the silyl group-containing polymer (S) and another polymer having a hydrolyzable silyl group. When the amount of the curing catalyst is adjusted to be at least 0.001 part by mass, the curing speed can effectively be accelerated, and when the amount of the curing catalyst is adjusted to be at most 10 parts by mass, it is possible to secure a working time at the time of its use.

[Dehydrating agent]

In order to improve the storage stability, the curable composition in the present invention may contain a small amount of a dehydrating agent within a range not to impair the effects of the present invention.

A specific example of such a dehydrating agent may, for example, be an alkyl orthoformate such as methyl orthoformate or ethyl orthoformate; an alkyl orthoacetate such as methyl orthoacetate or ethyl orthoacetate; a hydrolyzable organic silicone compound such as methyl trimethoxysilane, vinyl trimethoxysilane, tetramethoxysilane or tetraethoxysilane; or a hydrolyzable organic titanium compound. Among them, vinyl trimethoxysilane or tetraethoxysilane is preferred from the viewpoint of the cost and dehydrating ability.

In a case where a dehydrating agent is incorporated to the curable composition, its amount is preferably from 0.001 to 30 parts by mass, more preferably from 0.01 to 10 parts by mass, per 100 parts by mass of the total amount of the silyl group-containing polymer (S) and the organosilicate compound.

[Substrate anchor modifier (P)]

The curable composition of the present invention may contain a substrate anchor modifier.

The substrate anchor modifier (P) is an additive to improve adhesive strength of the curable composition to a substrate. As the substrate anchor modifier (P), at least one selected from the group consisting of a silane coupling agent, an isocyanate compound and a urethane resin may be preferably used. It is particularly preferred to use the silane coupling agent, since by adding a relatively small amount of such a silane coupling agent, the adhesive strength to a substrate is improved, while an adherence substance is almost free from bleeding out.

As the silane coupling agent, a silane coupling agent having a hydrolyzable group is preferred. Specifically, as the silane coupling agent having a hydrolyzable group, an isocyanate silane, an aminosilane, a mercaptosilane and an epoxysilane are preferred, and the aminosilane and the epoxysilane are particularly preferred. As such a silane, compounds specifically exemplified in the above-described method for introducing a hydrolyzable silyl group (PQ1) to (PQ4) are preferably mentioned.

As the isocyanate compound as the substrate anchor modifier (P), a polyfunctional polyisocyanate which is a known modified polyisocyanate compound is preferably exemplified. As the modified compound, a modified trimethylolpropane adduct, a modified burette or a modified isocyanurate may be mentioned. Specifically, Duranate P301-75E (manufactured by Asahi Kasei Corporation, trimethylolpropane adduct HDI (hexamethylenediisocyanurate), isocyanate content: 12.9 mass%, solid content: 75 mass%), CORONATE L (manufactured by Nippon Polyurethane Industry Co., Ltd., trimethylolpropane adduct TDI (tolylene diisocyanate), isocyanate content: 13.5 mass%, solid content: 75 mass%), etc. may be mentioned.

As the urethane resin as the substrate anchor modifier (P), an isocyanate group-terminated urethane prepolymer or a hydroxylic group-terminated urethane prepolymer may be used. As the hydroxy group-terminated urethane polymer, MP2000 (manufactured by CEMEDINE Co., Ltd.) may, for example, be mentioned.

In a case where the substrate anchor modifier (P) is used, the amount to be added to the curable composition is preferably from 0.01 to10 parts by mass, more preferably from 0.01 to 6 parts by mass, per 100 parts by mass of the total amount of the silyl group-containing polymer (S) and the organosilicate compound. When the amount to be added is at least 0.01 part by mass and at most 10 parts by mass, adhesive deposit can be suppressed.

[Other additives]

The following filler, reinforcing agent, stabilizer, flame retardant, antistatic agent, release agent and antifungal agent may be incorporated to the curable composition.

The filler or reinforcing agent may, for example, be carbon black, aluminum hydroxide, calcium carbonate, titanium oxide, silica, glass, bone meal, wood meal or fiber flakes.

The stabilizer may, for example, be an antioxidant, an ultraviolet absorber or a light-stabilizer.

The flame retardant may, for example, be a chloroalkyl phosphate, dimethylmethyl phosphonate, ammonium polyphosphate or an organic bromine compound.

The release agent may, for example, be wax, soap or silicone oil. The antifungal agent may, for example, be pentachlorophenol, pentachlorophenol laurate or bis(tri-n-butyltin) oxide.

<Adhesion-facilitating treatment>

The adherence substance layer is formed by applying a curable composition to a substrate layer and curing the curable composition. In order to well prevent an adhesive deposit to an adherend, it is preferred sufficiently bond the substrate layer and the adherence substance layer.

In the present invention, the surface at the side of the adherence substance layer of the substrate layer may be subjected to adhesion-facilitating treatment. The adhesion-facilitating treatment is a treatment to improve the adhesion strength between a substrate and an adherence substance. The adhesion-facilitating treatment is carried out prior to the application of the curable composition. An adhesive deposit can be prevented by this treatment.

The adhesion-facilitating treatment to the substrate may, for example, be plasma treatment, corona discharge treatment, flame treatment, ultraviolet ray treatment, primer treatment or blast treatment. Such a treatment may be a single treatment or a combination of two or more of the above treatments. Among them, plasma treatment, corona discharge treatment or primer treatment is preferred because the burden to the substrate layer is small, the treatment itself is easy, it is possible to improve the adhesion strength between the substrate and the adherence substance uniformly and homogeneously, and it has little influence on the optical properties of the adhesive laminate. Further, in the case where the adhesive laminate may be nontransparent, blast treatment is also effective.

The plasma treatment is a method to modify a substrate surface by exciting a gas by using a high-frequency power source to put the gas into a plasma state where the reactivity is high and modifying the substrate surface by the gas in a plasma state. The corona discharge treatment is a method to modify a substrate surface by applying a high alternating-current voltage between electrodes under atmospheric pressure to excite a corona discharge and exposing the substrate surface to the corona discharge. The flame treatment is a method to modify a substrate surface by using a flame. The ultraviolet ray treatment is a method to modify a substrate surface by exposing the substrate to ultraviolet rays (particularly far-ultraviolet rays having a wavelength of from 180 to 250 nm). The blast treatment is a method to modify a substrate surface by letting a grinding material in the form of fine-particles collide with the substrate surface. In any of these cases, the energy amount given to the substrate surface is suitably adjusted in accordance with the state of the substrate.

The primer treatment is a method to form a primer layer by applying a primer to a substrate surface. The primer is preferably, for example, a silane-type primer, an isocyanate-type primer, a urethane-type primer, a polyester resin-type primer, a rubber-type primer or an acrylic urethane-type primer. At the time of application of the primer, various types of additives may be added. For example, an electrical conductivity-imparting agent may be added.

As the silane-type primer, the above mentioned silane coupling agent having a hydrolyzable group is preferred.

As the isocyanate-type primer is preferably, the isocyanate compounds exemplified in the substrate anchor modifier (P) are preferred.

As the urethane-type primer, an isocyanate group-terminated urethane prepolymer or a hydroxy group-terminated urethane prepolymer may be used. The hydroxy group-terminated urethane prepolymer may, for example, be MP2000 (manufactured by CEMEDINE Co., Ltd.).

As the rubber-type primer, a primer containing a rubber component (natural rubber and/or synthetic rubber) and a polyisocyanate compound may be used. As such a primer, No. 40 (manufactured by The Yokohama Rubber Co., Ltd.) may be exemplified.

<Adherence substance layer>

The curable composition in the present invention is obtained by mixing the silyl group-containing polymer (S), the organosilicate compound, an optionally incorporated another polymer having a hydrolyzable silyl group and additives which may be incorporated as the case requires.

The adherence substance layer in the present invention is obtained by curing the above curable composition. The above curable composition is cured to obtain an adherence substance layer having a relatively low adhesive strength. That is, the adherence substance layer in the present invention is a cured product obtained by curing the above curable composition.

The adherence substance in the present invention preferably has an initial peel adhesive strength of at most 8 N/25 mm, more preferably more than 0 N/25 mm and at most 8 N/25 mm, further preferably more than 0 N/25 mm and at most 1 N/25 mm, particularly preferably from 0.005 to 0.8 N/25 mm. It is preferred that the curable composition in the present invention does not contain an additive which may increase the adherence property.

When forming an adherence substance layer by curing a curable composition comprising the silyl group-containing polymer (S), by curing the curable resin composition, a substrate layer adheres to a cured substance layer (adherence substance layer). In a case where the curable composition contains a substrate anchor modifier (P), by the presence of the substrate anchor modifier (P) in the composition at a time of cure, the adhesion (anchor) of the substrate layer and the cured substance layer becomes firm. On the other hand, in a case of a produced cured substance, since curing already terminates, including the added substrate anchor modifier (P), the effect to improve adhesion is not obtained by such cure. Here, the influence of the substrate anchor modifier (P) results at a time of curing the curable composition. Accordingly, since curing already terminates, the influence of the substrate anchor modifier (P) to outside of the cured substance is small. Therefore, the adhesive strength between an adherend and an adherence substance layer will not substantially change and is kept low, if the substrate anchor modifier (P) is added.

Accordingly, in such a case, the adhesive deposit can be suppressed while maintaining slightly adhesive or low adhesive to an adherend.

Particularly, in a case where the substrate layer is made of a polyester material or a polyolefin material, the adhesive strength between the substrate and the adherence substance layer tends to be low. Accordingly, in such a case, it is preferred to add the substrate anchor modifier (P) in the curable composition and/or apply adhesion-facilitating treatment to the adherence substance side surface of the substrate layer.

The curable composition containing the silyl group-containing polymer (S) in the present invention has a low viscosity and good coatability. Accordingly, since good coatability can be obtained without a solvent, the curable composition can be made solvent free at the time of forming an adherence substance layer. Further, since the composition is excellent in curing property, when it contacts with water, it gets promptly and solidly cured (moisture-cured) and a cured product can be obtained. The hydrolyzable silyl group ($-SiX_aR^{10}_{(3-a)}$) contributes to the moisture curing. Further, when the curable composition is applied on a substrate layer and cured, good adhesion to the substrate layer can be obtained. The cured product after the curing has good flexibility, good surface wettability and a low adherence property.

Thus, it is suitable as an adherence substance layer, which has good wettability and adhesion to an adherend and at the same time has good removability.

Particularly, when the silyl group-containing polymer (S) has a polar bond such as a urethane bond or a urea bond, better weak adherence property or low adherence property may be obtained. The reason is not clear, but it is considered that such a polar bond acts to increase cohesion, adhesion to a substrate and adherence property to an adherend, of the cured product. On the other hand, it is considered that the hydrolyzable silyl group acts to lower the adherence property of an adherence substance to an adherend. Then, it is considered that their interaction contributes to weak adherence property or low adherence property.

Further, the position where a hydrolyzable silyl group is introduced is the molecular terminal of the silyl group-containing polymer (S), whereby the cohesion can be improved without preventing the molecular motion, and the adhesive strength stably is exhibited.

Accordingly, by controlling the ratio (molar ratio of MU/MS) of the total amount (MU) of urethane bonds and urea bonds to the amount (MS) of the hydrolyzable silyl groups, it is possible to control the adhesive strength of the adherence substance. It is considered that a polar bond such as a urethane bond or a urea bond contributes also to good adhesion between the substrate layer and the adherence substance layer.

<Curing of curable composition>

The adherence substance layer in the present invention is obtainable by curing the curable composition in the present invention. The conditions for curing the curable composition may be set as the case requires. For example, one having a curable catalyst added, is prepared as the curable composition. A predetermined amount water is added as a curing agent thereto, followed by mixing thoroughly. The mixture is applied on the surface subjected to adhesion-facilitating treatment of a substrate. The application thickness is suitably set. Thereafter, the coated substrate is heated in an oven and aged at room temperature, whereby the curable composition can be cured. It is also effective to leave it in a humidified environment at the time of aging at room temperature or after such aging. Heating by e.g. an oven is suitably set depending upon e.g. the heat resistance temperature of the substrate. For example, it is preferred to leave it in an environment of from 60 to 120°C for from about 1 to 30 minutes. Particularly in a case where a solvent is used, it is preferred to set a constant drying time. However, rapid drying is not desirable, since it causes foaming. Further, in the oven, or after taking it out from the oven, steam may be applied. Further, in a case where primer treatment is carried out as adhesion-facilitating treatment, if heating is carried out at the time of curing of the curable composition, the adhesive strength between the substrate layer and the adherence substance layer is increased by the reaction of the primer layer with the curable composition. For example, heating for a short time at relatively high temperature is effective in some cases. Specifically, the short-time heating may, for example, be one at temperature of from 80 to 160°C (preferably from 100 to 150°C) for from 0.5 to 5 minutes (preferably from 1 to 4 minutes).

In the coating of the substrate surface with the curable composition, since the curable composition in the present invention usually has a low viscosity, the curable composition can be applied without using any solvent. However, as a case requires, the curable composition may contain a solvent. In a case where a solvent is used, after applying a curable composition in which a solvent is added, the solvent is removed by evaporation, and then the curable composition cures.

Such a solvent is not particularly limited, and it may, for example, be an aliphatic hydrocarbon, an aromatic hydrocarbon, a halogenated hydrocarbon, an alcohol, a ketone, an ester, an ether, an ester alcohol, a ketone alcohol, an ether alcohol, a ketone ether, a ketone ester or an ester ether.

Among them, it is preferred to employ an alcohol as the solvent, since the storage stability of the curable composition can thereby be improved. Such an alcohol is preferably an alkyl alcohol having from 1 to 10 carbon atoms, more preferably methanol, ethanol, isopropanol, isopentyl alcohol or hexyl alcohol, further preferably methanol or ethanol. Particularly when methanol is employed, if its amount is increased, the curing time of the curable composition can be prolonged. This is an effective technique to prolong a so-called pot life i.e. the time until the curable composition reaches the predetermined viscosity after its preparation.

In a case where a solvent is added to the curable composition, its amount is preferably at most 500 parts by mass, more preferably from 1 to 100 parts by mass, per 100 parts by mass of the total amount of the silyl group-containing polymer (S) and the organosilicate compound. If the amount exceeds 500 parts by mass, shrinkage of the cured product may occur along with evaporation of the solvent.

<Production process of adhesive laminate>

The adhesive laminate of the present invention is produced by subjecting one surface of a polyester-type substrate to adhesion-facilitating treatment, applying the above curable composition to this treated surface, and curing the curable composition. The adhesion-facilitating treatment to a polyester-type substrate may be carried out on the same line as the line for curable composition application or on another line. That is, a substrate subjected to adhesion-facilitating treatment is preliminarily prepared as a material, and the curable composition may be applied thereto. As the substrate subjected to adhesion-facilitating treatment such as corona treatment, commercial products may be used.

In a case where primer treatment is carried out as the adhesion-facilitating treatment, a primer is applied to one surface of a substrate followed by drying. At the time of application, the primer may be diluted with a solvent and applied, as the case requires. The thickness of the primer layer after drying is preferably from 0.01 to 10 $\mu$m, more preferably from 0.02 to 5 $\mu$m, from the viewpoint of adhesive strength between the substrate layer and the adherence substance layer.

Application of the curable composition may be carried out continuously. That is, on the treated surface subjected to adhesion-facilitating treatment of a substrate taken out from a roll, the curable composition having a predetermined amount of water mixed, is applied and then heated and dried in an in-line oven. The obtained shaped product (laminate) is wound up, together with a separator if necessary. Such an wound up laminate is stored and aged in a humidified room temperature environment as the case requires to obtain a shaped adhesive laminate. In another application method, the substrate and the separator in the above method may be reversed. That is, the curable composition is initially applied on the separator, and then, the treated surface subjected to adhesion-facilitating treatment of the substrate may be bonded to the layer of the curable composition.

The thickness of the adherence substance layer is determined in relation to the thickness of the substrate in the design of the adhesive laminate, and it is preferably from 3 to 100 $\mu$m, preferably from 10 to 60 $\mu$m.

As the apparatus to apply the primer or the curable composition, various coaters may be utilized. It may, for example, be a gravure roll coater, a reverse roll coater, a kiss roll coater, a dip roll coater, a bar coater, a knife coater or a spray coater.

It is preferred that the adhesive laminate of the present invention has an adherence substance layer provided on one surface of a substrate layer, and that the other side (back surface of the substrate) where an adherence substance layer is not provided is an untreated surface of the substrate (untreated substrate surface). With this condition, it becomes possible to wind up the substrate itself as a separator.

For example, the substrate layer is made of a polyester film or a polyolefin film, the adhesive strength between the untreated substrate surface and the adherence substance layer tend to be low, and thereby the substrate itself may preferably be used as a separator. In such a case, it is not necessary to provide a particular separator, which leads to waste reduction. Further, the back surface of the substrate is not subjected to treatment, and it is not necessary to subject the back surface of the substrate to release agent treatment. A representative release agent treatment is application of a silicone compound. However, in a case where a silicone compound is applied, it is highly possible that the silicone compound is transferred to an adherend, and so-called silicone contamination possibly occurs. The adhesive laminate of the present invention does not require a release agent treatment, and therefore silicone contamination will not occur. Therefore, the adhesive laminate of the present invention is suitably applied to electronics hardwares such as semiconductor devices and liquid crystal substrates.

Further, the cured product (adherence substance layer) obtained by curing the curable composition in the present invention can impart a good wettability to an adherend. It is considered that flexibility of the structure derived from a polyol contributes to such good wettability. That is, when a polyol has a linear structure having no branched structure, it has a molecular structure with which it is likely to move freely and acts to increase the flexibility. Further, a polyol structure having a polyether framework as the main component has a relatively low polarity. It is considered that with such a molecular structure, good wettability to an adherend can be obtained. It is considered that, particularly, as the chain length of the polyether framework is longer, the flexibility and the wettability are higher.

<Application of pressure sensitive adhesive laminate>

The adherence substance layer in the pressure sensitive adhesive laminate of the present invention has a relatively low adhesive strength, whereby while maintaining a conventional function of excellent high speed peeling property, the change with time of the high speed peeling property after time passes is small (excellent). Since loads to an adherend at a time of high speed peeling is maintained in a certain range, the pressure sensitive adhesive laminate of the present invention is particularly preferred as a surface protective sheet used in steps for producing precision instruments such as a surface protective sheet for electric members or a surface protective sheet for optical members.

Further, in a case where a transparent polyester film is employed as a substrate, since the adherence substance layer of the present invention has an excellent transparency, it is possible to observe an object without peeling a surface protective sheet made of the adherence substance laminate of the present invention.

The adherence substance layer in the pressure-sensitive adhesive laminate of the present invention has a low adhesive strength and excellent high speed peeling property and is excellent in wettability and adhesion to an adherend and is excellent in removability. Accordingly, the application of the pressure-sensitive adhesive laminate of the present invention may, for example, be a protective sheet for automobiles or a protective sheet for various displays, in addition to the surface protective sheet for electronic components and the surface protective sheet for optical members. Particularly, the pressure-sensitive adhesive laminate of the present invention is preferred as a surface protective sheet which is peeled in production steps, such as a surface protective sheet for electronic components such as electronic substrates or IC chips or a surface protective sheet for optical members such as polarizing plates, light diffusing plates or prism sheets, because the pressure-sensitive adhesive laminate of the present invention has a low adhesive strength, excellent removability and is excellent in high speed peeling property.

Further, since the change with time of the adhesive strength of the adherence substance is low, the pressure-sensitive adhesive laminate of the present invention can be peeled by low peel adhesive strength, and the peel adhesive strength and the high speed peel adhesive strength will not change substantially. Accordingly, electronic components and optical members bonded to the pressure-sensitive adhesive laminate of the present invention a surface protective sheet can be stored for a long period of time as they are.

EXAMPLES

Now, the present invention will be described in further detail with reference to Examples. However, it should be understood that the present invention is by no means restricted to such Examples.

In the following, propylene oxide will be sometimes abbreviated as PO, 3-isocyanatepropyltrimethoxysilane (isocyanate group content: 20.0 mass%) as TMS. Further, in the following Examples and Comparative Examples, the following compounds are used as a silyl group-containing polymer.

The following are used as an organosilicate compound.

Methylsilicate 51 (manufactured by COLCOAT CO., LTD.): Average tetramer of tetramethoxysilane (97%), tetramethoxysilane (2%), methanol (1%)

Methylsilicate 53A (manufactured by COLCOAT CO., LTD.): Average heptamer of tetramethoxysilane (97%), tetramethoxysilane (2%), methanol (1%)

(Reference Preparation Example 1: Preparation of composite metal cyanide complex catalyst)

By the following method, a zinc hexacyanocobaltate having tert-butyl alcohol as an organic ligand (hereinafter referred to as TBA-DMC catalyst) was prepared. In this Example, polyol X is a polyol having number average molecular weight (Mn) of 1,000, obtained by addition-polymerizing propylene oxide to dipropylene glycol.

Firstly, in a 500 ml flask, an aqueous solution comprising 10.2 g of zinc chloride and 10 g of water, was put, and while stirring this aqueous solution at 300 rpm and maintaining it at 40°C, an aqueous solution comprising 4.2 g of potassium hexacyanocobaltate ($K_3[Co(CN)]_6$) and 75 g of water, was dropwise added over a period of 30 minutes. After completion of the dropwise addition, the mixture was further stirred for 30 minutes. Thereafter, a mixture comprising 40 g of ethylene glycol mono-tert-butyl ether (hereinafter abbreviated as EGMTBE), 40 g of tert-butyl alcohol (hereinafter abbreviated as TBA), 80 g of water and 0.6 of polyol X, was added to the above mixture, followed by stirring at 40°C for 30 minutes and then at 60°C for 60 minutes. The obtained reaction mixture was subjected to filtration over a period of 50 minutes by means of a circular filtration plate with a diameter of 125 mm and a quantitative filter paper for fine particles (No. 5C manufactured by ADVANTEC) under pressure (0.25 MPa) to separate solid.

Then, to this cake containing the composite metal cyanide complex, a mixture comprising 18 g of EGMTBE, 18 g of TBA and 84 g of water, was added, followed by stirring for 30 minutes, whereupon pressure filtration (filtration time: 15 minutes) was carried out. To the cake containing the composite metal cyanide complex obtained by the filtration, a mixture comprising 54 g of EGMTBE, 54 g of TBA and 12 g of water, was further added, followed by stirring for 30 minutes, to obtain an EGMTBE/TBA slurry containing the composite metal cyanide complex having an organic ligand. This slurry was used as TBA-DMC catalyst.

5 g of this slurry was taken into a flask, preliminarily dried in a nitrogen stream and then dried under reduced pressure at 80°C for 4 hours. The obtained solid was weighed, whereby the concentration of the composite metal cyanide complex contained in this slurry was found to be 4.70 mass%.

(Preparation Example 1: Preparation of silyl group-containing polymer (S1-1))

Into a 10 L stainless steel pressure resistant reactor equipped with a stirrer, 800 g of a polyoxypropylene diol (hydroxy group-based Mw=1,000) as an initiator and TBA-DMC catalyst as a polymerization catalyst were introduced. The amount of the TBA-DMC catalyst was 50 ppm to the finish mass.

After replacing the interior of the reactor with nitrogen, the temperature was raised to 140°C, and 80 g of PO was introduced into the reactor with stirring and reacted. This is a step to activate TBA-DMC catalyst by initially supplying a small amount of PO.

Then, after the pressure in the reactor decreased, 7,120 g of PO was supplied with stirring, and the temperature in the reactor was maintained to be 140°C, and the stirring speed was maintained to be 500 rpm for 11 hours to let the polymerization reaction proceed, thereby to obtain polyol A. This polyol A had an average hydroxy value of 11.2 mgKOH/g.

To a four-necked flask equipped with a stirrer, a reflux condenser, a nitrogen-introducing tube, a thermometer and a dropping funnel, 1,000 g of the polyol A obtained as described above, 40.7 g of TMS (GF-40, isocyanatepropylt-trimethoxysilane, manufactured by WACKER Chemie AG,) as an isocyanate silane, and U-860 (di-n-octyltin bis, manufactured by NITTO KASEI CO., LTD.) as a urethane-forming catalyst were added. The amount of the used urethane-forming catalyst was adjusted to be an amount corresponding to 50 ppm to the total amount of the polyol A and TMS. Then, the temperature was gradually raised to 80°C, and a reaction was carried out until the peak of NCO by IR (infrared absorption spectrum) disappeared. After the disappearance, 5.2 g of IRGANOX 1076 (manufactured by Ciba Specialty Chemicals, Inc., antioxidant) and 0.62 g of KBM-803 (manufactured by Shin-Etsu Chemical Co., Ltd.: mercaptopropyl) trimethoxysilane) as a storage stabilizer were added to obtain a silyl group-containing polymer (S1-1). The introducing proportion of hydrolyzable silyl groups was 100%.

(Preparation Example 2: Preparation of silyl group-containing polymer (S1-2))

A polyol was prepared in the same manner as in the polyol A except that as an initiator, a polyoxypropylene triol (hydroxy group-based Mw=1,500) was used. Polyol B thus obtained had an average hydroxy value of 11 mgKOH/g.

To a four-necked flask equipped with a stirrer, a reflux condenser, a nitrogen-introducing tube, a thermometer and a dropping funnel, 1,000 g of the polyol B obtained as described above, and 61.0 g of TMS (GF-40, manufactured by Wacker Chemie AG, Isocyanatopropyltrimethoxysilane) as an isocyanate silane, were added, and U-860 (manufactured by NITTO KASEI CO., LTD., di-n-octyltin bis(isooctyl mecptoacetate)) was added as a urethane-forming catalyst. The amount of the urethane-forming catalyst was adjusted to be an amount corresponding to 50 ppm to the total amount of the polyol B and TMS. Then, the temperature was gradually raised to 80°C, and a reaction was carried out until the peak of NCO by IR disappeared. After the disappearance, 5.3 g of IRGANOX 1076 (manufactured by Ciba Specialty Chemicals, Inc., antioxidant) and 0.64 g of KBM-803 (manufactured by Shin-Etsu Chemical Co., Ltd.: mercaptopropyl) trimethoxysilane)as a storage stabilizer were added to obtain a silyl group-containing polymer (S1-2). The introducing proportion of hydrolyzable silyl groups was 100%.

(Preparation Example 3: Preparation of silyl group-containing polymer (S1-3))

A polyol C was prepared in the same manner as in the polyol A except that as an initiator, a polyoxypropylene triol (hydroxy group-based Mw=1,500) was used. Polyol C thus obtained had an average hydroxy value of 21 mgKOH/g.

To a four-necked flask equipped with a stirrer, a reflux condenser, a nitrogen-introducing tube, a thermometer and a dropping funnel, 1,000 g of the polyol C obtained as described above, and 76.3 g of TMS (GF-40, manufactured by Wacker Chemie AG, Isocyanatopropyltrimethoxysilane) as an isocyanate silane, were added, and U-860 (manufactured by NITTO KASEI CO., LTD., di-n-octyltin bis(isooctyl mecptoacetate)) was added as a urethane-forming catalyst. The amount of the urethane-forming catalyst was adjusted to be an amount corresponding to 50 ppm to the total amount of the polyol B and TMS. Then, the temperature was gradually raised to 80°C, and a reaction was carried out until the peak of NCO by IR disappeared. After the disappearance, 5.4 g of IRGANOX 1076 (manufactured by Ciba Specialty Chemicals, Inc., antioxidant) and 0.65 g of KBM-803 (manufactured by Shin-Etsu Chemical Co., Ltd.: mercaptopropyl) trimethoxysilane) as a storage stabilizer were added to obtain a silyl group-containing polymer (S1-3). The introducing proportion of hydrolyzable silyl groups was 100%.

Table 1 shows the prescription for preparing silyl group-containing polymers.

[Table 1]

|  |  | Prep. Ex. 1 | Prep. Ex. 2 | Prep. Ex. 3 |
|---|---|---|---|---|
|  |  | S1-1 | S1-2 | S1-3 |
| Polyol A | parts by mass | 1000 |  |  |
| Polyol B | parts by mass |  | 1000 |  |
| Polyol C | parts by mass |  |  | 1000 |
| GF-40 | parts by mass | 40.7 | 61.0 | 76.3 |
| U-860 | parts by mass | 0.05 | 0.05 | 0.05 |
| IRGANOX 1076 | parts by mass | 5.2 | 5.3 | 5.4 |
| KBM-803 | parts by mass | 0.62 | 0.64 | 0.65 |

(Examples 1 to 4 and Comparative Example 1)

To 100 parts by mass of the above silyl group-containing polymer (S1-1), 3 parts by mass and 5 parts by mass as solid content of methylsilicate 51 (manufactured by COLCOAT CO., LTD.) as the organosilicate compound were added respectively in Examples 1 and 2. To 100 parts by mass of the above silyl group-containing polymer (S1-1), 3 parts by mass and 5 parts by mass as solid content of methylsilicate 53A (manufactured by COLCOAT CO., LTD.) as the organosilicate compound were added respectively in Examples 3 and 4. Then, 1.5 parts by mass of dibutyloxytitanium diacetylacetonate (Ti(OC$_4$H$_9$)$_2$(C$_5$H$_7$O$_2$)$_2$) (Nacem titanium, manufactured by NIHON KAGAKU SANGYO CO., LTD.) and 100 parts by mass of methanol as a solvent were added and sufficiently mixed to obtain a curable composition. In Comparative Example 1, a comparative composition was obtained without adding the organosilicate compound.

By using the obtained curable composition, a pressure-sensitive adhesive laminate was prepared.

A not surface treated PET film having a thickness of 25 μm (A4 size: 29.7 cm x 21 cm, manufactured by TOYOBO CO., LTD., polyester film, tradename: E5001, thickness; 25 μm) was prepared. As adhesion-facilitating treatment, one surface of the substrate was subjected to plasma treatment with a primer composition (Primer No. 40, manufactured by YOKOHAMA RUBBER CO., LTD.). That is, after coating with the primer composition by an applicator, the substrate was dried at 130°C for 1 minute. After drying, the thickness of the primer layer was 1 μm.

Then, the primer treated surface was coated with the curable resin composition so as to have a coating thickness after drying of about 20 μm by an applicator. The substrate was dried in a circuit type oven at 130°C for 1 minute. After drying, as a separator, an OPP film was bonded, and the substrate was aged at 23°C at a relative humidity of 65% for 1 week to obtain a pressure-sensitive adhesive laminate.

With respect to the obtained pressure-sensitive adhesive laminate, the initial peeling strength evaluation and the initial high speed peeling strength evaluation were carried out.

Table 2 shows obtained results.

[Table 2]

| | | | Ex. 1 | Ex. 2 | Ex. 3 | Ex. 4 | Comp. Ex. 1 |
|---|---|---|---|---|---|---|---|
| Composition | S1-1 | parts by mass | 100 | 100 | 100 | 100 | 100 |
| | S1-2 | parts by mass | | | | | |
| | S1-3 | parts by mass | | | | | |
| | Methylsilicate 51 | parts by mass | 3 | 5 | | | |
| | Methylsilicate 53A | parts by mass | | | 3 | 5 | |
| | Nacem titanium | parts by mass | 1.5 | 1.5 | 1.5 | 1.5 | 1.5 |
| | Methanol | parts by mass | 100 | 100 | 100 | 100 | 100 |
| Initial peel strength | | N/25 mm | 0.09 | 0.09 | 0.08 | 0.08 | 0.10 |
| Initial high speed peel strength | | N/25 mm | 0.79 | 0.70 | 0.74 | 0.74 | 1.10 |
| Suppression of high speed peel strength | | % | 28 | 36 | 33 | 33 | - |

(Examples 5 to 8 and Comparative Example 2)

To 100 parts by mass of the above silyl group-containing polymer (S1-2), 3 parts by mass and 5 parts by mass as solid content of methylsilicate 51 (manufactured by COLCOAT CO., LTD.) as the organosilicate compound were added in Examples 5 and 6 respectively. To 100 parts by mass of the above silyl group-containing polymer (S1-2),, 3 parts by mass and 5 parts by mass as solid content of methylsilicate 53A (manufactured by COLCOAT CO., LTD.) as the organosilicate compound were added respectively in Examples 7 and 8. Then, 1.5 parts by mass of dibutyloxytitanium diacetylacetonate and 100 parts by mass of methanol as a solvent were added and sufficiently mixed to obtain a curable composition. In Comparative Example 2, a comparative composition was obtained without adding the organosilicate compound.

Then, the primer treated surface was coated with the curable resin composition so as to have a coating thickness after drying of about 20 μm by an applicator. The substrate was dried in a circuit type oven at 130°C for 1 minute. After drying, as a separator, an OPP film was bonded, and the substrate was aged at 23°C at a relative humidity of 65% for 1 week to obtain a pressure-sensitive adhesive laminate.

With respect to the obtained pressure-sensitive adhesive laminate, the initial peeling strength evaluation and the initial high speed peeling strength evaluation were carried out.

Table 3 shows obtained results.

[Table 3]

|  |  |  | Ex. 5 | Ex. 6 | Ex. 7 | Ex. 8 | Comp. Ex. 2 |
|---|---|---|---|---|---|---|---|
| Composition | S1-1 | parts by mass |  |  |  |  |  |
|  | S1-2 | parts by mass | 100 | 100 | 100 | 100 | 100 |
|  | S1-3 | parts by mass |  |  |  |  |  |
|  | Methylsilicate 51 | parts by mass | 3 | 5 |  |  |  |
|  | Methylsilicate 53A | parts by mass |  |  | 3 | 5 |  |
|  | Nacem titanium | parts by mass | 1.5 | 1.5 | 1.5 | 1.5 | 1.5 |
|  | Methanol | parts by mass | 100 | 100 | 100 | 100 | 100 |
| Initial peel strength |  | N/25 mm | 0.13 | 0.13 | 0.12 | 0.13 | 0.09 |
| Initial high speed peel strength |  | N/25 mm | 0.30 | 0.30 | 0.26 | 0.30 | 0.35 |
| Suppression of high speed peel strength |  | % | 14 | 14 | 26 | 14 | - |

(Examples 9 to 12 and Comparative Example 3)

To 100 parts by mass of the above silyl group-containing polymer (S1-3), 1 part by mass and 3 parts by mass as solid content of methylsilicate 51 (manufactured by COLCOAT CO., LTD.) as the organosilicate compound were added in Examples 9 and 10 respectively. To 100 parts by mass of the above silyl group-containing polymer (S1-3), 1 part by mass and 3 parts by mass as solid content of methylsilicate 53A (manufactured by COLCOAT CO., LTD.) as the organosilicate compound were added in Examples 11 and 12, respectively. Then, 1.5 parts by mass of dibutyloxytitanium diacetylacetonate and 100 parts by mass of methanol as a solvent were added and sufficiently mixed to obtain a curable composition. In Comparative Example 3, a comparative composition was obtained without adding the organosilicate compound.

Then, the primer treated surface was coated with the curable resin composition so as to have a coating thickness after drying of about 20 $\mu$m by an applicator. The substrate was dried in a circuit type oven at 130°C for 1 minute. After drying, as a separator, an OPP film was bonded, and the substrate was aged at 23°C at a relative humidity of 65% for 1 week to obtain a pressure-sensitive adhesive laminate.

With respect to the obtained pressure-sensitive adhesive laminate, the initial peeling strength evaluation and the initial high speed peeling strength evaluation were carried out.

Table 4 shows obtained results.

[Table 4]

|  |  |  | Ex. 9 | Ex.10 | Ex.11 | Ex.12 | Comp. Ex. 3 |
|---|---|---|---|---|---|---|---|
| Composition | S1-1 | parts by mass |  |  |  |  |  |
|  | S1-2 | parts by mass |  |  |  |  |  |
|  | S1-3 | parts by mass | 100 | 100 | 100 | 100 | 100 |
|  | Methylsilicate 51 | parts by mass | 1 | 3 |  |  |  |
|  | Methylsilicate 53A | parts by mass |  |  | 1 | 3 |  |
|  | Nacem titanium | parts by mass | 1.5 | 1.5 | 1.5 | 1.5 | 1.5 |
|  | Methanol | parts by mass | 100 | 100 | 100 | 100 | 100 |
| Initial peel strength |  | N/25 mm | 0.06 | 0.07 | 0.07 | 0.06 | 0.07 |
| Initial high speed peel strength |  | N/25 mm | 0.20 | 0.19 | 0.22 | 0.20 | 0.24 |
| Suppression of high speed peel strength |  | % | 17 | 21 | 8 | 17 | - |

Further, the peel strength evaluation after heat treatment and the high speed peel strength evaluation after treatment were carried out on the obtained pressure-sensitive adhesive laminates.

Table 5 shows obtained results.

[Table 5]

| | | | Ex. 9 | Ex.10 | Ex.11 | Ex.12 | Comp. Ex. 3 |
|---|---|---|---|---|---|---|---|
| Composition | S1-1 | arts by mass | | | | | |
| | S1-2 | parts by mass | | | | | |
| | S1-3 | parts by mass | 100 | 100 | 100 | 100 | 100 |
| | Methylsilicate 51 | parts by mass | 1 | 3 | | | |
| | Methylsilicate 53A | parts by mass | | | 1 | 3 | |
| | Nacem titanium | parts by mass | 1.5 | 1.5 | 1.5 | 1.5 | 1.5 |
| | Methanol | parts by mass | 100 | 100 | 100 | 100 | 100 |
| Initial peel strength | | N/25 mm | 0.06 | 0.07 | 0.07 | 0.06 | 0.07 |
| Peel strength after heat treatment | | N/25 mm | 0.10 | 0.10 | 0.12 | 0.10 | 0.15 |
| Increasing rate after treatment | | % | 67 | 43 | 71 | 67 | 114 |
| Initial high speed peel strength | | N/25 mm | 0.20 | 0.19 | 0.22 | 0.20 | 0.24 |
| High speed peel strength after heat treatment | | N/25 mm | 0.40 | 0.37 | 0.32 | 0.39 | 0.50 |
| Increasing rate of high speed peel strength after heat treatment | | % | 100 | 95 | 45 | 95 | 108 |

<Evaluation of initial peel strength>

In an environment of 23°C, a separator was removed from the adhesive laminate test piece to be measured (width: 25 mm), and the adhesive laminate test piece was adhered to a stainless steel plate (SUS 304(JIS)) having a thickness of 1.5 mm and treated by bright annealing, and press-bonded by a rubber roll having a weight of 2 kg. After bonding, the test piece was kept under condition of 23°C and humidity of 50% for 0.5 hour. The initial peel strength (180° peel at a tension speed of 0.3 m/min) of the test sample thus obtained was measured by using a tensile tester (RTE-1210, manufactured by ORIENTEC CO., LTD.) prescribed in JIS B7721. It is shown that as the value is smaller, the adhesive strength is lower, and the removability is excellent.

The values shown in Table are peel strength (unit: N/25 mm).

<Evaluation of initial high speed peel strength >

The test sample thus obtained was fixed on a mounting of a high speed peeling tester (product name: TE-701 model, manufactured by Tester Sangyo Co., Ltd.) so as to face the stainless steel face downward, and the PET film was pulled to measure peel strength (180° peel, tension speed of 30 m/min). It is shown that as this value is smaller, and the increasing rate to the initial peel strength is smaller, the high speed peel property is excellent.

<Evaluation of peel strength after heat treatment>

In the present invention, in order to evaluate peel adhesive strength after time passes, samples were subjected to heat treatment as accelerated test, and peel strength was measured.

In an environment of 23°C, a separator was removed from the adhesive laminate test piece to be measured (width: 25 mm), and the adhesive laminate test piece was adhered to a stainless steel plate (SUS 304(JIS)) having a thickness of 1.5 mm and treated by bright annealing, and press-bonded by a rubber roll having a weight of 2 kg. After bonding, the test piece was kept under condition of 120°C for 30 minutes. Then heat history of 40°C for 1 hour and heat history of 100°C for 1 hour were repeated three times. The test sample thus obtained was kept and then left for 2 hours to cool to room temperature. With respect to the heat-treated test sample thus obtained, the initial peel strength was measured in the same manner. It is shown that as the measured value is smaller, the adhesive strength of the test sample is smaller, and the test sample can be easily peeled even after time passes, and removability is excellent. Further, as the increasing rate of the age peel adhesive strength to the initial peel strength is smaller, the change of adhesive strength with lapse of time is small, and stability is excellent.

<Evaluation of high seed peel strength after heat treatment>

With respect to the heat-treated test sample obtained as mentioned above, the initial high speed peel strength was measured in the same manner. As the increasing rate to the initial peel strength after heat treatment is smaller, speed dependency of the peel strength with lapse of time is maintained low and excellent. Further, as the increasing rate of the peel adhesive strength after time passes after heat treatment to the initial peel strength is smaller, the change of adhesive strength with lapse of time is small, and stability is excellent.

<Results of initial peel strength and initial high speed peel strength evaluations>

In Examples 1 to 12, the organosilicate compound of the present invention was added, while in Comparative Examples 1 to 3, an organosilicate compound was not added.
Comparing Examples 1 to 4 and Comparative Example 1; Examples 5 to 8 and Comparative Example 2; and Examples 9 to 12 and Comparative Example 3 respectively, it is evident that in a case where the organosilicate compound was added, the increase rate of high speed peel strength to the peel strength was small, as compared with the case where the organosilicate compound was not added. That is, the speed dependency of the initial peel strength can be suppressed.
The suppression rate of the high speed peel strength was obtained by the following formula:

The suppression rate of the high speed peel strength (%) =

(high speed peel strength when silicate is not added-high speed peel strength when silicate is added)/high speed peel strength when silicate is not added ×

100) (%)

<Result of evaluations of peel strength and high speed peel strength before and after heating treatment>

In general, if an adherence substance is subjected to heat treatment after bonding to an adherend, the wettability of the adherence substance to the adherend changes, and the adhesion becomes high, whereby adhesive strength tends to increase.
It is evident from Examples 9 to 12 of the present invention that the change of adhesive strength at peeling rate of 0.3 m/min before and after heat treatment was small, by adding the organosilicate compound, the change of the wettability to the adherend was made to be small, and the change of peel adhesive strength with lapse of time was made to be small. Further, it is evident from Examples 9 to 12 of the present invention that the increase rate of the high speed peel strength before and after heat treatment fell within the range of 100%, the change of high speed peel property with lapse of time was small, and the stability was excellent. It is evident from Comparative Example 3 that the increase rate of the peel adhesive strength at a time of high speed peeling before and after heat treatment exceeded 100%, the change of high speed peel property with time was large, and the stability was poor.
The increase rate of the peel strength before and after heat treatment was obtained by the following formula. The increase rate of the high speed peel strength before and after heat treatment was similarly obtained.

Increase rate after heat treatment (%) = (peel strength after heating-not heated

peel strength)/not heated peel strength × 100 (%)

INDUSTRIAL APPLICABILITY

The pressure-sensitive adhesive laminate of the present invention has appropriate properties as a surface protective sheet for protecting a surface of electronic components and optical members.
The entire disclosure of Japanese Patent Application No. 2010-100127 filed on April 23, 2010 including specification, claims and summary is incorporated herein by reference in its entirety.

**Claims**

1. An adhesive laminate comprising a substrate layer and an adherence substance layer, wherein the adherence substance layer is a layer obtained by curing a curable composition containing the following silyl group-containing polymer (S) and an organosilicate compound:

   Silyl group-containing polymer (S): a silyl group-containing polymer having a polyether chain, a polyester chain and/or a polycarbonate chain in its main chain and having a hydrolyzable silyl group at its molecular terminal.

2. The adhesive laminate according to Claim 1, wherein the adherence substance layer is a layer obtained by curing a curable composition containing from 0.1 to 50 parts by mass of the organosilicate compound per 100 parts by mass of the silyl group-containing polymer (S).

3. The adhesive laminate according to Claim 1 or 2, wherein the hydrolyzable silyl group in the silyl group-containing polymer (S) is a trialkoxysilyl group.

4. The adhesive laminate according to any one of Claims 1 to 3, wherein the organosilicate compound is an organoxysilane represented by the following formula, and/or an organoxysiloxane :

   $(R^1O) (R^2O)(R^3O)Si[OSi(OR^4)(OR^5)]m\text{-}OR^6$     (1)

   wherein m is 0 to 29, each of $R^1$ to $R^6$ which are independent and may be the same or different from one another is a $C_{1\text{-}10}$ monovalent organic group.

5. The adhesive laminate according to Claim 4, wherein $R^1$ to $R^6$ are all methyl groups or all ethyl groups.

6. The adhesive laminate according to Claim 4 or 5, wherein the average of m is from 3 to 9.

7. The adhesive laminate according to any one of Claims 1 to 6, wherein the thickness of the adherence substance layer is from 3 to 100 $\mu$m.

8. The adhesive laminate according to any one of Claims 1 to 7, wherein the substrate layer is made of at least one material selected from the group consisting of a polyester material, a polyolefin material, a polyamide material and an polyimide material.

9. The adhesive laminate according to any one of Claims 1 to 8, which is obtained by curing the curable composition on a substrate surface.

10. The adhesive laminate according to any one of Claims 1 to 9, which has an initial peel adhesive strength of at most 8 N/25mm in accordance with the 180° peeling method as defined in JIS Z-0237(1999)-8.3.1.

11. The adhesive laminate according to any one of Claims 1 to 10, which is used as a surface protective sheet.

12. A surface protective sheet which is made of the adhesive laminate as defined in any one of Claims 1 to 10.

13. The surface protective sheet according to Claim 12, which is used as a surface protective sheet for an electronic member.

14. The surface protective sheet according to Claim 12, which is used as a surface protective sheet for an optical member.

| | | |
|---|---|---|
| **INTERNATIONAL SEARCH REPORT** | | International application No. |
| | | PCT/JP2011/059861 |

A. CLASSIFICATION OF SUBJECT MATTER
*C09J7/02*(2006.01)i, *C09J183/02*(2006.01)i, *C09J201/10*(2006.01)i

According to International Patent Classification (IPC) or to both national classification and IPC

B. FIELDS SEARCHED

Minimum documentation searched (classification system followed by classification symbols)
C09J1/00-201/10, C08L1/00-101/14

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2010/041667 A1 (Asahi Glass Co., Ltd.), 15 April 2010 (15.04.2010), claims; paragraphs [0055], [0077] to [0079] (Family: none) | 1-14 |
| A | WO 2010/026995 A1 (Asahi Glass Co., Ltd.), 11 March 2010 (11.03.2010), claims; paragraphs [0054], [0085] to [0089] (Family: none) | 1-14 |
| A | JP 59-71377 A (Kaneka Corp.), 23 April 1984 (23.04.1984), claims; page 3, upper left column, line 9 to upper right column, line 10 & US 4463115 A        & EP 106330 A1 & DE 3371351 D        & AU 1996283 A & CA 1208392 A        & AU 563235 B | 1-14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 July, 2011 (22.07.11) | 02 August, 2011 (02.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td colspan="2" style="text-align:center"><strong>INTERNATIONAL SEARCH REPORT</strong></td><td>International application No.<br>PCT/JP2011/059861</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2004/039892 A1  (Kaneka Corp.),<br>13 May 2004 (13.05.2004),<br>claims; page 44, line 2 to page 45, line 12;<br>page 87, lines 17 to 19; page 89, line 2 to<br>page 93, line 5<br>& JP 2005-306891 A       & JP 2006-316287 A<br>& US 2006/0128919 A1    & EP 1566412 A1<br>& EP 1832627 A2          & EP 2233531 A1<br>& EP 2233532 A1          & WO 2008/036610 A2<br>& DE 60316593 T          & DE 60334165 D | 1-14 |
| A | JP 2-67387 A  (Dow Corning Corp.),<br>07 March 1990 (07.03.1990),<br>claims; page 3, lower right column, lines 10<br>to 19<br>& US 4906695 A            & EP 350181 A2<br>& NO 892285 A             & AU 615316 B<br>& FI 893334 A             & AU 3794089 A | 1-14 |

Form PCT/ISA/210 (continuation of second sheet) (July 2009)

**EP 2 562 225 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003012751 A
- WO 200573333 A
- WO 200573334 A
- JP 6297645 A
- JP 2010100127 A